(19) Europäisches Patentamt
European Patent Office
Office européen des brevets

(11) EP 4 130 145 A1

(12) EUROPEAN PATENT APPLICATION
published in accordance with Art. 153(4) EPC

(43) Date of publication:
**08.02.2023 Bulletin 2023/06**

(21) Application number: **21779533.5**

(22) Date of filing: **29.03.2021**

(51) International Patent Classification (IPC):
***C08L 27/16*** *(1974.07)* ***H01M 4/131*** *(2010.01)*
***H01M 4/62*** *(1974.07)* ***C01B 32/15*** *(2017.01)*

(52) Cooperative Patent Classification (CPC):
**C01B 32/15; C08L 27/16; H01M 4/131; H01M 4/62;**
Y02E 60/10

(86) International application number:
**PCT/JP2021/013297**

(87) International publication number:
**WO 2021/200822 (07.10.2021 Gazette 2021/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.04.2020 JP 2020067031**

(71) Applicant: **Daikin Industries, Ltd.**
**Osaka-shi, Osaka 530-0001 (JP)**

(72) Inventors:
- **Fukushima, Kanta**
  **Osaka-shi, Osaka 530-8323 (JP)**
- **ICHINOSE, Yuma**
  **Osaka-shi, Osaka 530-8323 (JP)**
- **SHINODA, Chihiro**
  **Osaka-shi, Osaka 530-8323 (JP)**
- **YAMAZAKI, Shigeaki**
  **Osaka-shi, Osaka 530-8323 (JP)**

(74) Representative: **Hoffmann Eitle**
**Patent- und Rechtsanwälte PartmbB**
**Arabellastraße 30**
**81925 München (DE)**

# (54) ELECTRODE MIXTURE, ELECTRODE, AND SECONDARY BATTERY

(57) Provided is an electrode mixture containing a lithium-containing transition metal oxide; a conductive additive; a binder; and an organic solvent, wherein the conductive additive comprises at least one nanocarbon material selected from the group consisting of a multilayer carbon nanotube, a carbon nanohorn, a carbon nanofiber, a fullerene, and a graphene, the binder comprises a fluorine-containing copolymer comprising vinylidene fluoride unit and a fluorinated monomer unit, provided that vinylidene fluoride unit is excluded from the fluorinated monomer unit, and a content of vinylidene fluoride unit in the fluorine-containing copolymer is more than 50 mol% and 99 mol% or less with respect to all monomer units.

EP 4 130 145 A1

## Description

### TECHNICAL FIELD

The present disclosure relates to an electrode mixture, an electrode, and a secondary battery.

### BACKGROUND ART

Non-aqueous electrolyte secondary batteries such as lithium ion secondary batteries are used for small electric/electronic devices suitable for carrying such as laptop computers, mobile phones, smartphones, tablet personal computers, and ultrabooks, because of their high voltage, high energy density, low self-discharge, low memory effect, and ultra-lightweight, and they are further being put to practical use as a wide range of power sources such as in-vehicle power sources for driving automobiles or the like and large stationary power sources.

As an electrode mixture for forming an electrode of such a non-aqueous electrolytic solution secondary battery, Patent Literature 1, for example, discloses a positive electrode mixture slurry comprising: a composite positive electrode active material including a solvent, a positive electrode active material, and a first binder covering the surface of the positive electrode active material and insoluble in the solvent; a fibrous carbon material having an average fiber diameter of 40 nm or less and an average aspect ratio of 500 or more; and a second binder soluble in the solvent. The mass% of the first binder is 0.2 to 1.5 mass% with respect to the total mass of the composite positive electrode active material, the mass% of the fibrous carbon material is 0.01 to 0.5 mass% with respect to the total mass of the total solid content, the mass% of the second binder is 0.1 to 0.5 mass% with respect to the total mass of the total solid content. When the specific surface area of the positive electrode active material and the mass% of the first binder with respect to the total mass of the composite positive electrode active material are designated as a ($m^2/g$) and b (mass%), respectively, b/a is 5.0 or less.

### RELATED ART

### PATENT LITERATURE

Patent Literature 1: Japanese Patent Application Laid-Open No. 2017-182989

### SUMMARY OF THE INVENTION

### PROBLEM TO BE SOLVED BY THE INVENTION

It is an object of the present disclosure to provide an electrode mixture capable of forming an electrode mixture layer that is excellent in flexibility and adhesion to the current collector and a secondary battery that is excellent in battery characteristics.

### MEANS FOR SOLVING THE PROBLEM

The present disclosure provides an electrode mixture comprising a lithium-containing transition metal oxide; a conductive additive; a binder; and an organic solvent, wherein the conductive additive comprises at least one nanocarbon material selected from the group consisting of a multilayer carbon nanotube, a carbon nanohorn, a carbon nanofiber, a fullerene, and a graphene, the binder comprises a fluorine-containing copolymer comprising vinylidene fluoride unit and a fluorinated monomer unit, provided that vinylidene fluoride unit is excluded from the fluorinated monomer unit, and a content of vinylidene fluoride unit in the fluorine-containing copolymer is more than 50 mol% and 99 mol% or less with respect to all monomer units.

The nanocarbon material is preferably at least one selected from the group consisting of the multilayer carbon nanotube and the graphene.

The content content of vinylidene fluoride unit in the fluorine-containing copolymer is 57.0 mol% or more and 97.0 mol% or less with respect to all monomer units.

The fluorinated monomer unit is preferably tetrafluoroethylene unit.

The content of the binder is preferably 0.3 to 3.0 mass% with respect to the total mass of the lithium-containing transition metal oxide, the conductive additive, and the binder.

The content of the conductive additive is preferably 0.3 to 3.0 mass% with respect to the total mass of the lithium-containing transition metal oxide, the conductive additive, and the binder.

The binder preferably further comprises a polyvinylidene fluoride.

Further, the present disclosure provides an electrode comprising a current collector, and an electrode mixture layer provided on one or each of both sides of the current collector and formed by the electrode mixture.

Further, the present disclosure provides a secondary battery comprising the electrode.

EFFECTS OF INVENTION

The present disclosure can provide an electrode mixture capable of forming an electrode mixture layer that is excellent in flexibility and adhesion to the current collector and a secondary battery that is excellent in battery characteristics.

DESCRIPTION OF EMBODIMENTS

Hereinafter, specific embodiments of the present disclosure will be described in detail, but the present disclosure is not limited to the following embodiments.

<Electrode mixture>

The electrode mixture of the present disclosure contains a lithium-containing transition metal oxide, a conductive additive, a binder, and an organic solvent.

<Lithium-containing transition metal oxide>

The electrode mixture of the present disclosure contains a lithium-containing transition metal oxide. The lithium-containing transition metal oxide functions as a positive electrode active material or a negative electrode active material in the electrode mixture layer.

The electrode mixture of the present disclosure can be used as a positive electrode mixture when containing a lithium-containing transition metal oxide that functions as a positive electrode active material and can be used as a negative electrode mixture when containing a lithium-containing transition metal oxide that functions as a negative electrode active material. In particular, the electrode mixture of the present disclosure is preferably a positive electrode mixture. That is, the electrode mixture of the present disclosure preferably contains a lithium-containing transition metal oxide as a positive electrode active material.

The transition metal of the lithium-containing transition metal oxide is preferably V, Ti, Cr, Mn, Fe, Co, Ni, Cu, or the like.

Examples of the lithium-containing transition metal oxide that functions as a positive electrode active material include lithium-cobalt composite oxides such as $LiCoO_2$, lithium-nickel composite oxides such as $LiNiO_2$, lithium-manganese composite oxides such as $LiMnO_2$, $LiMn_2O_4$, and $Li_2MnO_3$, those obtained by substituting some of the transition metal atoms, as the main constituents, of these lithium-containing transition metal oxides with other metals such as Al, Ti, V, Cr, Mn, Fe, Co, Li, Ni, Cu, Zn, Mg, Ga, Zr, and Si. Specific examples of those obtained by substituting include $LiNi_{0.5}Mn_{0.5}O_2$, $LiNi_{0.85}Co_{0.10}Al_{0.05}O_2$, $LiNi_{0.82}Co_{0.15}Al_{0.03}O_2$, $LiNi_{0.80}Co_{0.15}Al_{0.05}O_2$, $LiNi_{1/3}Co_{1/3}Mn_{1/3}O_2$, $LiMn_{1.8}Al_{0.2}O_4$, $LiMn_{1.5}Ni_{0.5}O_4$, and $Li_4Ti_5O_{12}$.

Further, the lithium-containing transition metal oxide that functions as a positive electrode active material used can be a lithium-containing transition metal phosphate compound. Specific examples of the lithium-containing transition metal phosphate compound include iron phosphates such as $LiFePO_4$, $Li_3Fe_2(PO_4)_3$, and $LiFeP_2O_7$, cobalt phosphates such as $LiCoPO_4$, those obtained by substituting some of the transition metal atoms, as the main constituents, of these lithium-containing transition metal phosphate compounds with other metals such as Al, Ti, V, Cr, Mn, Fe, Co, Li, Ni, Cu, Zn, Mg, Ga, Zr, Nb, and Si.

Among these, the lithium-containing transition metal oxide that functions as a positive electrode active material is preferably a lithium-nickel composite oxide, more preferably a lithium-nickel composite oxide represented by Formula (1):

$$Li_yNi_{1-x}M_xO_2$$

wherein x is $0.01 \le x \le 0.5$, y is $0.9 \le y \le 1.2$, and M represents a metal atom (provided that Li and Ni are excluded from the metal atom). Such a lithium-containing transition metal oxide containing a large amount of Ni is beneficial for increasing the capacity of the secondary battery.

In Formula (1), x is a coefficient satisfying $0.01 \le x \le 0.5$, preferably $0.05 \le x \le 0.4$, further preferably $0.10 \le x \le 0.3$, in view of obtaining secondary batteries with higher capacity.

In Formula (1), examples of the metal atom represented by M include V, Ti, Cr, Mn, Fe, Co, Cu, Al, Zn, Mg, Ga, Zr, and Si. The metal atom represented by M is preferably a transition metal such as V, Ti, Cr, Mn, Fe, Co, and Cu, or a combination of the transition metal with another metal such as Al, Ti, V, Cr, Mn, Fe, Co, Cu, Zn, Mg, Ga, Zr, and Si.

The lithium-containing transition metal oxide that functions as a positive electrode active material is preferably at least one selected from the group consisting of $LiN_{0.80}Co_{0.15}Al_{0.05}O_2$, $LiNi_{0.82}Co_{0.15}Al_{0.03}O_2$, $LiNi_{0.33}Mn_{0.33}Co_{0.33}O_2$, $LiNi_{0.5}Mn_{0.3}Co_{0.2}O_2$, $LiNi_{0.6}Mn_{0.2}Co_{0.2}O_2$, $LiNi_{0.8}Mn_{0.1}Co_{0.1}O_2$, and $LiNi_{0.90}Mn_{0.05}Co_{0.05}O_2$, more preferably at least one selected from the group consisting of $LiNi_{0.82}Co_{0.15}Al_{0.03}O_2$, $LiNi_{0.6}Mn_{0.2}CO_{0.2}O_2$, and $LiNi_{0.9}Mn_{0.1}Co_{0.1}O_2$.

The lithium-nickel composite oxide represented by Formula (1) may be combined with a different positive electrode active material. Specifically, examples of the different positive electrode active material include $LiCoO_2$, $LiMnO_2$, $LiMn_2O_4$, $Li_2MnO_3$, $LiMn_{1.8}Al_{0.2}O_4$, $L_{14}T_{15}O_{12}$, $LiFePO_4$, $Li_3Fe_2$ $(PO_4)_3$, $LiFeP_2O_3$, $LiCoPO_4$, $Li_{2.2}Fe_{0.4}Mn_{0.4}O_2$, and $LiNiO_2$.

Examples of the lithium-containing transition metal oxide that functions as a negative electrode active material include lithium titanates such as $Li_{4+x}Ti_5O_{12}$ ($0 \leq x \leq 3$) having a spinel structure and $Li_{2+y}Ti_3O_7$ ($0 \leq y \leq 3$) having ramsdellite structure.

The lithium-containing transition metal oxide used can be a lithium-containing transition metal oxide having a surface onto which another substance is attached, the substance having compositional features different from those of the lithium-containing transition metal oxide. Examples of the substance attached to the surface include oxides such as aluminum oxide, silicon oxide, titanium oxide, zirconium oxide, magnesium oxide, calcium oxide, boron oxide, antimony oxide, and bismuth oxide, sulfates such as lithium sulfate, sodium sulfate, potassium sulfate, magnesium sulfate, calcium sulfate, and aluminum sulfate, and carbonates such as lithium carbonate, calcium carbonate, and magnesium carbonate.

Such a surface-attached substance can be attached onto the surface of the lithium-containing transition metal oxide, for example, by a method including dissolving or suspending the substance in a solvent and impregnating the lithium-containing transition metal oxide with the solution to add the substance thereto, followed by drying, a method including dissolving or suspending a precursor of the substance in a solvent, impregnating the lithium-containing transition metal oxide with the solution to add the substance thereto, and causing a reaction by heating or the like, or a method including adding the substance to a precursor of the lithium-containing transition metal oxide and firing together.

The amount of the substance to be used is preferably 0.1 ppm or more, more preferably 1 ppm or more, further preferably 10 ppm or more, preferably 20% or less, more preferably 10% or less, further preferably 5% or less, with respect to the mass of the lithium-containing transition metal oxide. The surface-attached substance can suppress oxidation reaction of the non-aqueous electrolyte on the surface of the lithium-containing transition metal oxide to improve the lifetime of the battery. However, in the case where the amount attached is excessively small, the effect is not sufficiently exerted, and in the case where the amount is excessively large, the resistance may increase because it inhibits the entry and exit of lithium ions.

Examples of the shape of the particles of the lithium-containing transition metal oxide to be used include bulk, polyhedral, spherical, ellipsoidal, plate, needle, and columnar shapes, as conventionally used. In particular, a lithium-containing transition metal oxide in which primary particles aggregate to form spherical or ellipsoidal secondary particles is preferable. Generally, since the active material in the electrode expands and contracts with charge and discharge of electrochemical elements, deterioration such as destruction of the active material and breakage of the conductive path due to the stress is likely to occur. Therefore, a case where primary particles aggregate to form secondary particles is more preferable than a case where an active material consists of single particles, which are primary particles, in view of relieving the stress of expansion and contraction to prevent deterioration. Further, it is preferable that the particles have a spherical or ellipsoidal shape rather than a plate shape or the like that tend to be axially oriented. The particles having a spherical or ellipsoidal shape are unlikely to be oriented when forming an electrode to result in small expansion and contraction of the electrode during charging and discharging, and it is also easy to uniformly mix the particles having a spherical or ellipsoidal shape with a conductive additive when producing the electrode.

The lithium-containing transition metal oxide generally has a tapped density of 1.3 $g/cm^3$ or more, preferably 1.5 $g/cm^3$ or more, further preferably 1.6 $g/cm^3$ or more, most preferably 1.7 $g/cm^3$ or more. When the tapped density of the lithium-containing transition metal oxide falls below such a lower limit, the amount of the dispersion medium necessary for forming the electrode mixture layer increases, and the necessary amounts of the conductive additive and binder also increase, so that the filling ratio of the lithium-containing transition metal oxide in the electrode mixture layer may be restricted to thereby restrict the battery capacity. Use of a lithium-containing transition metal oxide with high tapped density enables forming a high-density electrode mixture layer. Generally, the higher the tapped density, the more preferable it is, and there is no particular upper limit. However, an excessively high tapped density may be a rate-determining factor of the diffusion of lithium ions through the non-aqueous electrolyte in the electrode mixture layer to result in deterioration in the load characteristics. Therefore, the tapped density is generally 2.5 $g/cm^3$ or less, preferably 2.4 $g/cm^3$ or less.

The tapped density of the lithium-containing transition metal oxide is defined as a density determined from the volume and the weight of a sample measured by passing the sample through a sieve with an opening size of 300 μm

and dropping into a 20-$cm^3$ tapping cell to fill the cell capacity and thereafter performing tapping with a stroke length of 10 mm 1,000 times using a powder density-measuring instrument (such as a tap denser, available from Seishin Enterprise Co., Ltd).

The particles of the lithium-containing transition metal oxide have a median diameter d50 (the size of secondary particles, in the case where primary particles aggregate to form secondary particles) of generally 0.1 μm or more, preferably 0.5 μm or more, more preferably 1 μm or more, most preferably 3 μm or more, and generally 20 μm or less, preferably 18 μm or less, more preferably 16 μm or less, most preferably 15 μm or less. When the median diameter d50 of the particles of the lithium-containing transition metal oxide falls within such a range, the electrode mixture of the present disclosure has excellent coating properties. Here, use of two or more types of lithium-containing transition metal oxides having different median diameters d50 in combination enables the electrode mixture of the present disclosure to form a high-density electrode mixture layer.

The median diameter d50 in the present disclosure is measured using a known laser diffraction/scattering particle size distribution measurement apparatus. In the case of using LA-920, available from HORIBA, Ltd., as a particle size distribution analyzer, measurement is performed by setting the measurement refractive index to 1.24, after ultrasonic dispersion for 5 minutes using a 0.1-mass% sodium hexametaphosphate aqueous solution as a dispersion medium used in measurement.

In the case where primary particles aggregate to form secondary particles, the primary particles of the lithium-containing transition metal oxide have an average diameter of generally 0.01 μm or more, preferably 0.05 μm or more, further preferably 0.08 μm or more, most preferably 0.1 μm or more, and generally 3 μm or less, preferably 2 μm or less, further preferably 1 μm or less, most preferably 0.6 μm or less. When the average primary particle size of the lithium-containing transition metal oxide falls within such a range, it is easy to form spherical secondary particles, the powder filling property is excellent, and the crystallinity is also excellent. Therefore, the electrode mixture of the present disclosure can form an electrode mixture layer that is furthermore excellent in flexibility and adhesion to the current collector and can form a secondary battery that is furthermore excellent in battery characteristics. The diameter of the primary particles is measured by observation using a scanning electron microscope (SEM). Specifically, the diameter is determined by determining the maximum length between the left and right boundaries along the horizontal straight line in an image at a magnification of 10,000 for each of any 50 primary particles and averaging the values.

The lithium-containing transition metal oxide has a BET specific surface area of generally 0.2 $m^2/g$ or more, preferably 0.3 $m^2/g$ or more, further preferably 0.4 $m^2/g$ or more, and generally 4.0 $m^2/g$ or less, preferably 2.5 $m^2/g$ or less, further preferably 1.5 $m^2/g$ or less. When the BET specific surface area of the lithium-containing transition metal oxide falls within such a range, the electrode mixture of the present disclosure has excellent coating properties and can form an electrode mixture layer that is furthermore excellent in flexibility and adhesion to the current collector and a secondary battery that is furthermore excellent in battery characteristics.

The BET specific surface area is defined as a value measured for a sample pre-dried under nitrogen circulate at 150°C for 30 minutes using a surface area meter (for example, a fully automatic surface area measuring device, available from Ohkura Riken Co., Ltd.) by the single point BET nitrogen adsorption by the gas flow method using a nitrogen-helium mixed gas accurately adjusted so that the relative pressure value of nitrogen to the atmospheric pressure is 0.3.

A method that is common as a method for producing an inorganic compound is used as the method for producing the lithium-containing transition metal oxide. In particular, various methods are conceivable for producing a spherical or ellipsoidal lithium-containing transition metal oxide. Examples thereof include: a method for obtaining a lithium-containing transition metal oxide by dissolving or milling and dispersing a transition metal raw material such as transition metal nitrates and sulfates together with raw materials of other elements, as needed, in a solvent such as water, adjusting the pH under stirring to produce a spherical precursor, recovering it, followed by drying, as required, thereafter adding a Li source such as LiOH, $Li_2CO_3$, and $LiNO_3$ thereto, and firing the mixture at a high temperature; a method for obtaining a lithium-containing transition metal oxide by dissolving or milling and dispersing a transition metal raw material such as transition metal nitrates, sulfates, hydroxides, and oxides together with raw materials of other elements, as needed, in a solvent such as water, subjecting the resultant to drying and forming with a spray dryer or the like to produce a spherical or ellipsoidal precursor, adding a Li source such as LiOH, $Li_2CO_3$, and $LiNO_3$ thereto, and firing the mixture at a high temperature; and a method for obtaining a lithium-containing transition metal oxide by dissolving or milling and dispersing a transition metal raw material such as transition metal nitrates, sulfates, hydroxides, and oxides together with a Li source such as LiOH, $Li_2CO_3$, and $LiNO_3$ and raw materials of other elements, as needed, in a solvent such as water, subjecting the resultant to drying and forming with a spray dryer or the like to produce a spherical or ellipsoidal precursor, and firing the precursor at a high temperature.

One lithium-containing transition metal oxide may be used alone, or two or more lithium-containing transition metal oxides with different compositional features or different powder physical properties may be used in any combination at any ratio.

The content of the lithium-containing transition metal oxide in the electrode mixture is preferably 95.0 to 99.8

mass%, more preferably 96.0 to 99.4 mass%, further preferably 96.5 to 99.0 mass%, with respect to the total mass of the lithium-containing transition metal oxide, the conductive additive, and the binder, in view of forming an electrode mixture layer that is furthermore excellent in flexibility and adhesion to the current collector and also forming a secondary battery that is furthermore excellent in battery characteristics.

<Conductive additive>

The conductive additive contained in the electrode mixture of the present disclosure at least contains at least one nanocarbon material selected from the group consisting of a multilayer carbon nanotube, a carbon nanohorn, carbon nanofibers, fullerene, and graphene. Since the electrode mixture of the present disclosure contains a specific nanocarbon material as a conductive additive, an electrode mixture layer having excellent adhesion to the current collector can be obtained without impairing the flexibility, when forming an electrode mixture layer for the electrode of the secondary battery by using the electrode mixture of the present disclosure. Further, a secondary battery including such an electrode mixture layer exhibits a high capacity retention rate after high-temperature storage, a low resistance increase rate, and a small change of the amount of gas and has excellent battery characteristics.

The nanocarbon material is a material formed by carbon atoms having a size of nanometer size. The shape of the nanocarbon material may be tubular, hollow needle, hollow rod, hollow particle, or sheet-like shape. Moreover, it is preferable that the nanocarbon material have conductivity.

The nanocarbon material is at least one selected from the group consisting of a multilayer carbon nanotube, a carbon nanohorn, carbon nanofibers, fullerene, and graphene. It is preferably, but not limited to, at least one selected from the group consisting of a multilayer carbon nanotube, a carbon nanohorn, and graphene, more preferably at least one selected from the group consisting of a multilayer carbon nanotube and graphene, further preferably a multilayer carbon nanotube, in view of forming an electrode mixture layer that is furthermore excellent in flexibility and adhesion to the current collector and also forming a secondary battery that is furthermore excellent in battery characteristics. One nanocarbon material may be used alone, or two or more nanocarbon materials may be used in any combination at any ratio.

Graphene is a two-dimensional material and is distinguished from carbon nanotubes known as one-dimensional materials. Carbon nanotubes have the shape of a graphene sheet rolled into a cylinder. Among the carbon nanotubes, the single-walled ones are called single-walled carbon nanotubes (SWNTs), and the multi-walled ones are called multi-walled carbon nanotubes (MWNTs).

It is also preferable that the conductive additive contained in the electrode mixture of the present disclosure contain a conductive additive other than the nanocarbon material. Examples of the conductive additive other than the nanocarbon material include carbon black such as acetylene black and Ketjenblack; natural graphite; and metal powder such as nickel and aluminum.

As the conductive additive other than the nanocarbon material, carbon black is preferable, and acetylene black is more preferable.

The content of the conductive additive in the electrode mixture is preferably 0.01 mass% or more, more preferably 0.1 mass% or more, further preferably 0.3 mass% or more, particularly preferably 0.5 mass% or more, and preferably 3.0 mass% or less, more preferably 2.5 mass% or less, further preferably 2.0 mass% or less, particularly preferably 1.6 mass% or less, with respect to the total mass of the lithium-containing transition metal oxide, the conductive additive, and the binder, in view of forming an electrode mixture layer that is furthermore excellent in flexibility and adhesion to the current collector and also forming a secondary battery that is furthermore excellent in battery characteristics.

The content of the nanocarbon material in the electrode mixture is preferably 0.01 mass% or more, more preferably 0.1 mass% or more, further preferably 0.2 mass% or more, still further preferably 0.3 mass% or more, particularly preferably 0.5 mass% or more, and preferably 3.0 mass% or less, more preferably 2.5 mass% or less, further preferably 2.0 mass% or less, particularly preferably 1.6 mass% or less, with respect to the total mass of the lithium-containing transition metal oxide, the conductive additive, and the binder, in view of forming an electrode mixture layer that is furthermore excellent in flexibility and adhesion to the current collector and also forming a secondary battery that is furthermore excellent in battery characteristics.

In the case where the electrode mixture of the present disclosure contains a nanocarbon material and a conductive additive other than the nanocarbon material as conductive additives, the ratio of the content of the nanocarbon material to the content of the other conductive additive is preferably 1/99 to 99/1, more preferably 10/90 to 95/5, further preferably 20/80 to 90/10, in terms of a mass ratio (the mass of the conductive additive other than the nanocarbon material/the mass of the nanocarbon material), in view of forming an electrode mixture layer that is furthermore excellent in flexibility and adhesion to the current collector and also forming a secondary battery that is furthermore excellent in battery characteristics.

<Binder>

The binder contained in the electrode mixture of the present disclosure comprises a fluorine-containing copolymer containing a vinylidene fluoride unit (VdF unit) and a fluorinated monomer unit (provided that the VdF unit is excluded from the fluorinated monomer unit).

Examples of the fluorinated monomer (provided that the VdF is excluded from the fluorinated monomer) include tetrafluoroethylene (TFE), vinyl fluoride, trifluoroethylene, chlorotrifluoroethylene (CTFE), fluoroalkyl vinyl ether, hexafluoropropylene (HFP), (perfluoroalkyl)ethylene, 2,3,3,3-tetrafluoropropene, and trans-1,3,3,3-tetrafluoropropene. Among these, at least one selected from the group consisting of TFE, CTFE, and HFP is preferable, at least one selected from the group consisting of TFE and HFP is more preferable, TFE is particularly preferable, in view of forming an electrode mixture layer that is furthermore excellent in flexibility and adhesion to the current collector and also forming a secondary battery that is furthermore excellent in battery characteristics.

The fluorinated monomer unit (provided that the VdF unit is excluded from the fluorinated monomer unit) may or may not have a polar group.

The content of the VdF unit in the fluorine-containing copolymer is more than 50 mol% and 99 mol% or less with respect to all monomer units. When the content of the VdF unit falls within such a range, an electrode mixture layer that is excellent in flexibility and adhesion to the current collector, and a secondary battery that is excellent in battery characteristics can be formed. When the content of the VdF unit in the fluorine-containing copolymer is excessively small, sufficient adhesion of the electrode mixture layer to the current collector may not be obtained, or excellent battery characteristics of the secondary battery may not be obtained.

The content of the VdF unit in the fluorine-containing copolymer is preferably 57.0 mol% or more, more preferably 60.0 mol% or more, further preferably 63.0 mol% or more, and preferably 99.0 mol% or less, more preferably 97.0 mol% or less, further preferably 95.0 mol% or less, particularly preferably 90.0 mol% or less, most preferably 85.0 mol% or less, with respect to all monomer units, in view of forming an electrode mixture layer that is furthermore excellent in flexibility and adhesion to the current collector and also forming a secondary battery that is furthermore excellent in battery characteristics.

The content of the fluorinated monomer unit (provided that VdF unit is excluded from the fluorinated monomer unit) in the fluorine-containing copolymer is not limited as long as it is less than 50 mol%. It is preferably 1.0 mol% or more, more preferably 3.0 mol% or more, further preferably 5.0 mol% or more, particularly preferably 10.0 mol% or more, most preferably 15.0 mol% or more, and preferably 43.0 mol% or less, more preferably 40.0 mol% or less, further preferably 37.0 mol% or less, with respect to all monomer units. When the fluorine-containing copolymer contains the fluorinated monomer unit (provided that VdF unit is excluded from the fluorinated monomer unit) in a content falling within such a range, the electrode mixture of the present disclosure can form an electrode mixture layer that is furthermore excellent in flexibility and adhesion to the current collector and a secondary battery that is furthermore excellent in battery characteristics.

In the present disclosure, the compositional features of the fluorine-containing copolymer can be determined, for example, by $^{19}F$-NMR measurement.

The fluorine-containing copolymer may further contain a non-fluorinated monomer unit. Examples of the non-fluorinated monomer include non-fluorinated monomers having no polar group such as ethylene and propylene, and non-fluorinated monomers having a polar group (which may be hereinafter referred to as polar group-containing monomers).

Use of a non-fluorinated monomer having a polar group allows the polar group to be introduced into the fluorine-containing copolymer, whereby more excellent adhesion between the positive electrode mixture layer and the current collector is obtained. The polar group that can be contained in the fluorine-containing copolymer is preferably at least one selected from the group consisting of a carbonyl group-containing group, an epoxy group, a hydroxy group, a sulfonate group, a sulfate group, a phosphate group, an amino group, an amide group, and an alkoxy group, more preferably at least one selected from the group consisting of a carbonyl group-containing group, an epoxy group, and a hydroxy group, further preferably a carbonyl group-containing group. The aforementioned hydroxy group does not include the hydroxy group as a part of the aforementioned carbonyl group-containing group. Further, the aforementioned amino group is a monovalent functional group obtained by removing hydrogen from ammonia or primary or secondary amine.

The aforementioned carbonyl group-containing group is a functional group having a carbonyl group (-C(=O)-). The aforementioned carbonyl group-containing group is preferably a carboxylic acid anhydride group or a group represented by Formula: -COOR, wherein R represents a hydrogen atom, an alkyl group, or a hydroxyalkyl group. The alkyl group and the hydroxyalkyl group preferably have 1 to 16, more preferably 1 to 6, further preferably 1 to 3 carbon atoms. Specifically, examples of the group represented by Formula: -COOR include $-COOCH_2CH_2OH$, $-COOCH_2CH(CH_3)OH$, $-COOCH(CH_3)CH_2OH$, -COOH, $-COOCH_3$, and $-COOC_2H_5$. In the case where the group represented by Formula: -COOR is -COOH or contains -COOH, -COOH may be a carboxylate such as a carboxylate metal salt and ammonium

carboxylate.

Further, the aforementioned carbonyl group-containing group may be a group represented by Formula: - X-COOR, wherein the main chain of X is composed of 2 to 15 atoms, the molecular weight of the atomic group represented by X is preferably 350 or less, and R represents a hydrogen atom, an alkyl group, or a hydroxyalkyl group. The alkyl group and the hydroxyalkyl group preferably have 1 to 16, more preferably 1 to 6, further preferably 1 to 3 carbon atoms.

The aforementioned amide group is preferably a group represented by Formula: -CO-NRR', wherein R and R' each independently represent a hydrogen atom or a substituted or unsubstituted alkyl group, or a bond represented by Formula: -CO-NR"-, wherein R" represents a hydrogen atom, a substituted or unsubstituted alkyl group, or a substituted or unsubstituted phenyl group.

Examples of the aforementioned polar group-containing monomer include hydroxyalkyl (meth)acrylates such as hydroxyethyl acrylate and 2-hydroxypropyl acrylate; alkylidene malonates such as dimethyl methylidene malonate; vinyl carboxyalkyl ethers such as vinyl carboxymethyl ether and vinyl carboxyethyl ether; carboxyalkyl (meth)acrylates such as 2-carboxyethyl acrylate and 2-carboxyethyl methacrylate; (meth)acryloyloxyalkyl dicarboxylic acid esters such as acryloyloxyethyl succinic acid, acryloyloxypropyl succinic acid, methacryloyloxyethyl succinic acid, acryloyloxyethyl phthalic acid, and methacryloyloxyethyl phthalic acid; unsaturated dibasic acid monoesters such as monomethyl maleate ester, monoethyl maleate ester, citraconic acid monomethyl ester, and citraconic acid monoethyl ester; and a monomer (2) represented by Formula (2) :

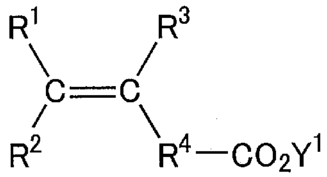

wherein $R^1$ to $R^3$ each independently represent a hydrogen atom or a hydrocarbon group having 1 to 8 carbon atoms, $R^4$ represents a single bond or a hydrocarbon group having 1 to 8 carbon atoms, and $Y^1$ represents an inorganic cation and/or an organic cation.

The polar group-containing monomer unit that can be contained in the fluorine-containing copolymer is preferably a unit based on monomer (2) represented by Formula (2).

In Formula (2), $Y^1$ represents an inorganic cation and/or an organic cation. Examples of the inorganic cation include cations such as H, Li, Na, K, Mg, Ca, Al, and Fe. Examples of the organic cation include cations such as $NH_4$, $NH_3R^5$, $NH_2R^5{}_2$, $NHR^5{}_3$, $NR^5{}_4$, wherein each $R^5$ independently represents an alkyl group having 1 to 4 carbon atoms. $Y^1$ is preferably H, Li, Na, K, Mg, Ca, Al, or $NH_4$, more preferably H, Li, Na, K, Mg, Al, or $NH_4$, further preferably H, Li, Al, or $NH_4$, particularly preferably H. In the specific examples of the inorganic cation and the organic cation above described, the reference numerals and valences are omitted for convenience of description.

In Formula (2), $R^1$ to $R^3$ each independently represent a hydrogen atom or a hydrocarbon group having 1 to 8 carbon atoms. The hydrocarbon group is a monovalent hydrocarbon group. The hydrocarbon group preferably has 4 or less carbon atoms. Examples of the hydrocarbon group include an alkyl group, an alkenyl group, and an alkynyl group having the aforementioned number of carbon atoms, and a methyl group or an ethyl group are preferable. $R^1$ and $R^2$ preferably each independently represent a hydrogen atom, a methyl group, or an ethyl group, and $R^3$ preferably represents a hydrogen atom or a methyl group.

In Formula (2), $R^4$ represents a single bond or a hydrocarbon group having 1 to 8 carbon atoms. The hydrocarbon group is a divalent hydrocarbon group. The hydrocarbon group preferably has 4 or less carbon atoms. Examples of the hydrocarbon group include an alkylene group and an alkenylene group having the aforementioned number of carbon atoms. Among these, at least one selected from the group consisting of a methylene group, an ethylene group, an ethylidene group, a propylidene group, and an isopropylidene group is preferable, and a methylene group is more preferable.

The monomer (2) is preferably at least one selected from the group consisting of (meth)acrylic acid and a salt thereof, vinyl acetic acid (3-butene acid) and a salt thereof, 3-pentenoic acid and a salt thereof, 4-pentenoic acid and a salt thereof, 3-hexene acid and a salt thereof, 4-heptenoic acid and a salt thereof, and 5-hexene acid and a salt thereof, more preferably at least one selected from the group consisting of 3-butene acid and a salt thereof, and 4-pentenoic acid and a salt thereof.

In the case where the fluorine-containing copolymer contains the polar group-containing monomer unit, the content of the polar group-containing monomer unit in the fluorine-containing copolymer is preferably 0.05 to 2.0 mol%, more preferably 0.10 mol% or more, further preferably 0.25 mol% or more, particularly preferably 0.40 mol% or more, and more preferably 1.5 mol% or less, with respect to all monomer units.

In the present disclosure, the content of the polar group-containing monomer unit in the fluorine-containing

copolymer can be measured by acid-base titration of the acid group in the case where the polar group is an acid group such as a carboxylic acid, for example.

Examples of the fluorine-containing copolymer include a VdF/TFE copolymer, a VdF/HFP copolymer, a VdF/TFE/HFP copolymer, a VdF/TFE/2, 3, 3, 3-tetrafluoropropene copolymer, a VdF/TFE/(meth)acrylic acid copolymer, a VdF/HFP/(meth)acrylic acid copolymer, a VdF/CTFE copolymer, a VdF/TFE/4-pentenoic acid copolymer, a VdF/TFE/3-butene acid copolymer, a VdF/TFE/HFP/(meth)acrylic acid copolymer, a VdF/TFE/HFP/4-pentenoic acid copolymer, a VdF/TFE/HFP/3-butene acid copolymer, a VdF/TFE/2-carboxyethyl acrylate copolymer, a VdF/TFE/HFP/2-carboxyethyl acrylate copolymer, a VdF/TFE/acryloyloxyethyl succinic acid copolymer, and a VdF/TFE/HFP/acryloyloxyethyl succinic acid copolymer.

Among these, the fluorine-containing copolymer is preferably a fluorine-containing copolymer consisting only of a VdF unit, a TFE unit, and any non-fluorinated monomer unit, in view of forming an electrode mixture layer that is furthermore excellent in flexibility and adhesion to the current collector and also forming a secondary battery that is furthermore excellent in battery characteristics.

In the case where the fluorine-containing copolymer contains a VdF unit and a TFE unit, the molar ratio of the VdF unit to the TFE unit (VdF unit/TFE unit) is preferably more than 50/50 and 99/1 or less, more preferably 57/43 to 97/3, further preferably 60/40 to 95/5, particularly preferably 63/37 to 90/10, most preferably 63/37 to 85/15.

The weight-average molecular weight (in terms of polystyrene) of the fluorine-containing copolymer is preferably 50,000 to 3,000,000, more preferably 80,000 or more, further preferably 100,000 or more, particularly preferably 200,000 or more, more preferably 2,400,000 or less, further preferably 2,200,000 or less, particularly preferably 2,000,000 or less. The weight-average molecular weight can be measured by gel permeation chromatography (GPC) using dimethylformamide as a solvent.

The fluorine-containing copolymer has a number-average molecular weight (in terms of polystyrene) of preferably 20,000 to 1,500,000, more preferably 40,000 or more, further preferably 70,000 or more, particularly preferably 140,000 or more, and more preferably 1,400,000 or less, further preferably 1,200,000 or less, particularly preferably 1,100,000 or less. The number-average molecular weight can be measured by gel permeation chromatography (GPC) using dimethylformamide as a solvent.

The fluorine-containing copolymer has a melting point of preferably 100 to 170°C, more preferably 110 to 165°C, further preferably 120 to 163°C. The melting point is determined using a differential scanning calorimetry (DSC) device and is a temperature corresponding to the maximum value in the heat-of-fusion curve when the temperature is raised from 30°C to 220°C at a rate of 10°C/minute, thereafter lowered to 30°C at a rate of 10°C/minute, and raised again to 220°C at a rate of 10°C/minute.

The fluorine-containing copolymer preferably has an elongation at break of 100% or more. The elongation at break is more preferably 200% or more, further preferably 300% or more.

The elongation at break can be measured by the following method. A fluorine-containing copolymer solution obtained by dissolving the fluorine-containing copolymer in N-methyl-2-pyrrolidone (NMP) to a concentration of 10 to 20 mass% is casted onto a glass plate, dried at 100°C for 12 hours, and further dried at 100°C under vacuum for 12 hours, to obtain a film with a thickness of 50 to 100 μm. The film is punched into a dumbbell shape, and the elongation at break at 25°C is measured by an autograph.

The fluorine-containing copolymer preferably has a storage modulus at 30°C of 1,100 MPa or less and a storage modulus at 60°C of 500 MPa or less.

The storage modulus at 30°C of the fluorine-containing copolymer is more preferably 800 MPa or less, further preferably 600 MPa or less.

The storage modulus at 60°C of the fluorine-containing copolymer is more preferably 350 MPa or less.

The storage modulus at 30°C of the fluorine-containing copolymer is preferably 100 MPa or more, more preferably 150 MPa or more, further preferably 200 MPa or more.

The storage modulus at 60°C of the fluorine-containing copolymer is preferably 50 MPa or more, more preferably 80 MPa or more, further preferably 130 MPa or more.

The storage modulus is a value measured at 30°C and 60°C for a sample with a length of 30 mm, a width of 5 mm, and a thickness of 50 to 100 μm by dynamic viscoelasticity using a dynamic viscoelasticity analyzer DVA220, available from IT Measurement Control Co., Ltd., under conditions of a tensile mode, a grip width of 20 mm, a measurement temperature ranging from -30°C to 160°C, a temperature-increasing rate of 2°C/min, and a frequency of 1 Hz.

The measurement sample can be produced, for example, by dissolving the fluorine-containing copolymer in N-methyl-2-pyrrolidone (NMP) to a concentration of 10 to 20 mass% to give a fluorine-containing copolymer solution, casting the solution onto a glass plate, followed by drying at 100°C for 12 hours and further drying at 100°C for 12 hours under vacuum, to form a film with a thickness of 50 to 100 μm, and cutting the film to a length of 30 mm and a width of 5 mm.

The fluorine-containing copolymer has a rate of weight increase after immersion in an electrolyte at 60°C for one week of preferably 250 mass% or less, more preferably 200 mass% or less. The rate of weight increase after immersion in an electrolyte at 60°C for one week of the fluorine-containing copolymer is further preferably 180 mass%

or less, particularly preferably 160 mass% or less, and may be 105 mass% or more.

The aforementioned rate of weight increase can be determined by the following method.

The NMP solution (8 mass%) of the fluorine-containing copolymer is casted into a glass petridish, followed by vacuum drying at 100°C for 12 hours, to produce a fluorine-containing copolymer film with a thickness of 200 μm. The film obtained is punched into a diameter of 6 mm and put into an electrolyte (a solution obtained by dissolving $LiPF_6$ in a solvent of ethylene carbonate/ethyl methyl carbonate at 3/7 (volume ratio) to a concentration of 1 M) contained in a sample bottle, and the rate of weight increase is determined after the film is left standing at 60°C for one week.

It is also preferable that the binder contained in the electrode mixture of the present disclosure further contain polyvinylidene fluoride (PVdF). Use of the fluorine-containing copolymer and PVdF as binders enables an electrode mixture layer that is furthermore excellent in flexibility and adhesion to the current collector and a secondary battery that is furthermore excellent in battery characteristics to be formed.

Polyvinylidene fluoride (PVdF) is a polymer containing a unit based on vinylidene fluoride (VdF) (which will be hereinafter referred to as VdF unit), and the polymer may be a VdF homopolymer consisting only of a VdF unit or a polymer containing a VdF unit and a unit based on a monomer copolymerizable with the VdF.

In the PVdF, the monomer copolymerizable with VdF is preferably a monomer different from tetrafluoroethylene (TFE). That is, the PVdF is preferably free from TFE units.

In the PVdF, examples of the monomer copolymerizable with the VdF include fluorinated monomers and non-fluorinated monomers, and fluorinated monomers are preferable. Examples of the fluorinated monomers include vinyl fluoride, trifluoroethylene, chlorotrifluoroethylene (CTFE), fluoroalkyl vinyl ether, hexafluoropropylene (HFP), (perfluoroalkyl) ethylene, 2, 3, 3, 3-tetrafluoropropene, and trans-1, 3, 3, 3-tetrafluoropropene. Examples of the non-fluorinated monomers include ethylene and propylene.

In the PVdF, the monomer copolymerizable with VdF is preferably at least one fluorinated monomer selected from the group consisting of CTFE, fluoroalkyl vinyl ether, HFP, and 2, 3, 3, 3-tetrafluoropropene, more preferably at least one fluorinated monomer selected from the group consisting of CTFE, HFP and fluoroalkyl vinyl ether.

In the PVdF, the content of the monomer unit copolymerizable with VdF is preferably 0 to 5.0 mol%, more preferably 0 to 3.0 mol%, with respect to all monomer units. In the PVdF, the content of the fluorinated monomer unit copolymerizable with VdF is preferably less than 5.0 mol%, more preferably less than 3.0 mol%, further preferably less than 1.0 mol%, with respect to all monomer units.

In the present disclosure, the compositional features of the PVdF can be measured, for example, by $^{19}F$-NMR measurement.

The PVdF may have a polar group. Use of the fluorine-containing copolymer and the PVdF having the polar group as binders enables an electrode mixture layer that is furthermore excellent in flexibility and adhesion to the current collector and a secondary battery that is furthermore excellent in battery characteristics to be formed.

The polar group is not limited, as long as it is a functional group having a polarity. It is preferably at least one selected from the group consisting of a carbonyl group-containing group, an epoxy group, a hydroxy group, a sulfonate group, a sulfate group, a phosphate group, an amino group, an amide group, and an alkoxy group, more preferably at least one selected from the group consisting of a carbonyl group-containing group, an epoxy group, and a hydroxy group, further preferably a carbonyl group-containing group, in view of obtaining furthermore excellent adhesion of the electrode mixture layer to be formed to the current collector while maintaining the excellent flexibility of the electrode mixture layer to be formed and the excellent battery characteristics of the secondary battery to be formed. The aforementioned hydroxy group does not include the hydroxy group as a part of the aforementioned carbonyl group-containing group. Further, the aforementioned amino group is a monovalent functional group obtained by removing hydrogen from ammonia or primary or secondary amine.

The aforementioned carbonyl group-containing group is a functional group having a carbonyl group (-C(=O)-). The aforementioned carbonyl group-containing group is preferably a carboxylic acid anhydride group or a group represented by Formula: -COOR, wherein R represents a hydrogen atom, an alkyl group, or a hydroxyalkyl group, more preferably a group represented by Formula: -COOR, in view of obtaining furthermore excellent adhesion of the electrode mixture layer to be formed to the current collector while maintaining the excellent flexibility of the electrode mixture layer to be formed and the excellent battery characteristics of the secondary battery to be formed. The alkyl group and the hydroxyalkyl group preferably have 1 to 16, more preferably 1 to 6, further preferably 1 to 3 carbon atoms. Specifically, examples of the group represented by Formula: -COOR include $-COOCH_2CH_2OH$, $-COOCH_2CH(CH_3)OH$, $-COOCH(CH_3)CH_2OH$, -COOH, $-COOCH_3$, and $-COOC_2H_5$. In the case where the group represented by Formula: -COOR is -COOH or contains -COOH, -COOH may be a carboxylate such as a carboxylate metal salt and ammonium carboxylate.

Further, the aforementioned carbonyl group-containing group may be a group represented by Formula: - X-COOR, wherein the main chain of X is composed of 2 to 15 atoms, the molecular weight of the atomic group represented by X is preferably 350 or less, and R represents a hydrogen atom, an alkyl group, or a hydroxyalkyl group. The alkyl group and the hydroxyalkyl group preferably have 1 to 16, more preferably 1 to 6, further preferably 1 to 3 carbon atoms.

The aforementioned amide group is preferably a group represented by Formula: -CO-NRR', wherein R and R'

each independently represent a hydrogen atom or a substituted or unsubstituted alkyl group, or a bond represented by Formula: -CO-NR"-, wherein R" represents a hydrogen atom, a substituted or unsubstituted alkyl group, or a substituted or unsubstituted phenyl group.

The aforementioned polar group can be introduced into PVdF either by polymerizing VdF with a monomer having the aforementioned polar group (which will be hereinafter referred to as polar group-containing monomer) or reacting PVdF with a compound having the aforementioned polar group, but it is preferable to polymerize VdF with the aforementioned polar group-containing monomer, in view of productivity.

When VdF is polymerized with the aforementioned polar group-containing monomer, PVdF containing a VdF unit and a polar group-containing monomer unit is obtained. Specifically, the PVdF preferably contains the aforementioned polar group-containing monomer unit, in view of obtaining furthermore excellent adhesion of the electrode mixture layer to be formed to the current collector while maintaining the excellent flexibility of the electrode mixture layer to be formed and the excellent battery characteristics of the secondary battery to be formed. The content of the polar group-containing monomer unit is preferably 0.001 to 5.0 mol%, more preferably 0.01 to 3.0 mol%, further preferably 0.10 to 1.5 mol%, with respect to all monomer units.

In the present disclosure, the content of the polar group-containing monomer unit in the PVdF can be measured, in the case where the polar group is an acid group such as a carboxylic acid, for example, by acid-base titration of the acid group.

Examples of the aforementioned polar group-containing monomer include hydroxyalkyl (meth)acrylates such as hydroxyethyl acrylate and 2-hydroxypropyl acrylate; unsaturated monobasic acids such as (meth)acrylic acid, crotonic acid, vinyl acetic acid (3-butene acid), 3-pentenoic acid, 4-pentenoic acid, 3-hexene acid, and 4-heptenoic acid; unsaturated dibasic acids such as maleic acid, maleic anhydride, citraconic acid, and citraconic anhydride; alkylidene malonates such as dimethyl methylidene malonate; vinyl carboxyalkyl ethers such as vinyl carboxymethyl ether and vinyl carboxyethyl ether; carboxyalkyl (meth)acrylates such as 2-carboxyethyl acrylate and 2-carboxyethyl methacrylate; (meth) acryloyloxyalkyl dicarboxylic acid esters such as acryloyloxyethyl succinic acid, methacryloyloxyethyl succinic acid, acryloyloxyethyl phthalic acid, acryloyloxypropyl succinic acid, and methacryloyloxyethyl phthalic acid; and unsaturated dibasic acid monoesters such as monomethyl maleate ester, monoethyl maleate ester, citraconic acid monomethyl ester, and citraconic acid monoethyl ester.

In the case of introducing the aforementioned polar group into PVdF by reacting PVdF with a compound having the aforementioned polar group, the compound having the aforementioned polar group to be used can be the aforementioned polar group-containing monomer, or a silane coupling agent or a titanate coupling agent having a group that is reactive with PVdF and a hydrolyzable group. The hydrolyzable group is preferably an alkoxy group. In the case of using a coupling agent, the coupling agent can be added to PVdF by reaction with PVdF that is swelled or dissolved in a solvent.

The PVdF to be used also can be a material obtained by partially dehydrofluorinating PVdF with a base and further reacting the partially dehydrofluorinated PVdF with an oxidant. Examples of the aforementioned oxidant include hydrogen peroxide, hypochlorite, palladium halide, chromium halide, alkali metal permanganate, peracid compound, alkyl peroxide, and alkyl persulfate.

The content of the VdF unit in the PVdF is preferably more than 95.0 mol%, more preferably more than 97.0 mol%, further preferably more than 99.0 mol%, with respect to all monomer units, in view of forming an electrode mixture layer that is furthermore excellent in flexibility and adhesion to the current collector and also forming a secondary battery that is furthermore excellent in battery characteristics.

Further, the content of the VdF unit in the PVdF is preferably 95.0 to 99.999 mol%, more preferably 97.0 mol% or more, further preferably 98.5 mol% or more, and more preferably 99.99 mol% or less, further preferably 99.90 mol% or less, with respect to all monomer units, in view of forming an electrode mixture layer that is furthermore excellent in flexibility and adhesion to the current collector and also forming a secondary battery that is furthermore excellent in battery characteristics.

The weight-average molecular weight (in terms of polystyrene) of the PVdF is preferably 50,000 to 3,000,000, more preferably 80,000 or more, further preferably 100,000 or more, particularly preferably 200,000 or more, and more preferably 2,400,000 or less, further preferably 2,200,000 or less, particularly preferably 2,000,000 or less, in view of forming an electrode mixture layer that is furthermore excellent in flexibility and adhesion to the current collector and also forming a secondary battery that is furthermore excellent in battery characteristics. The weight-average molecular weight can be measured by gel permeation chromatography (GPC) using N,N-dimethylformamide as a solvent. Further, the weight-average molecular weight of the PVdF (A) may be 1,000,000 or more or may be 1,500,000 or more, in view of forming an electrode mixture layer having very excellent flexibility and very excellent adhesion to the current collector and also forming a secondary battery having very excellent battery characteristics.

The number-average molecular weight (in terms of polystyrene) of the PVdF is preferably 20,000 to 1,500,000, more preferably 40,000 or more, further preferably 70,000 or more, particularly preferably 140,000 or more, and more preferably 1,400,000 or less, further preferably 1,200,000 or less, particularly preferably 1,100,000 or less, in view of

forming an electrode mixture layer that is furthermore excellent in flexibility and adhesion to the current collector and also forming a secondary battery that is furthermore excellent in battery characteristics. The number-average molecular weight can be measured by gel permeation chromatography (GPC) using dimethylformamide as a solvent.

The PVdF has a melting point of preferably 100 to 240°C. The melting point can be determined using a differential scanning calorimetry (DSC) device and is a temperature corresponding to the maximum value in the heat-of-fusion curve when the temperature is raised at a rate of 10°C/minute.

The PVdF can be produced, for example, by a conventionally known method including appropriately mixing VdF, the aforementioned polar group-containing monomer, and an additive such as a polymerization initiator, and performing solution polymerization or suspension polymerization.

The PVdF has a storage modulus at 30°C of preferably 2,000 MPa or less, more preferably 1,800 MPa or less.

The PVdF has a storage modulus at 60°C of preferably 1,500 MPa or less, more preferably 1,300 MPa or less.

The PVdF has a storage modulus at 30°C of preferably 1,000 MPa or more, more preferably 1,100 MPa or more.

The PVdF has a storage modulus at 60°C of preferably 600 MPa or more, more preferably 700 MPa or more.

The storage modulus of the PVdF can be measured by the same method as for the storage modulus of the fluorine-containing copolymer.

In the case where the binder contains PVdF in addition to the fluorine-containing copolymer, the mass ratio of the PVdF to the fluorine-containing copolymer (PVdF/fluorine-containing copolymer) in the binder is preferably 99/1 to 1/99, more preferably 97/3 to 3/97, further preferably 95/5 to 5/95, further preferably 90/10 to 10/90, particularly preferably 85/15 to 15/85, most preferably 80/20 to 40/60, in view of forming an electrode mixture layer that is furthermore excellent in flexibility and adhesion to the current collector and also forming a secondary battery that is furthermore excellent in battery characteristics.

The binder may contain a polymer other than the PVdF or the fluorine-containing copolymer. Examples of the other polymer include polymethacrylate, polymethylmethacrylate, polyacrylonitrile, polyimide, polyamide, polyamide imide, polycarbonate, styrene rubber, and butadiene rubber.

The content of the fluorine-containing copolymer in the binder may be preferably 1 mass% or more, more preferably 3 mass% or more, further preferably 5 mass% or more, particularly preferably 10 mass% or more, most preferably 15 mass% or more, and 100 mass% or less, with respect to the mass of the binder, in view of forming an electrode mixture layer that is furthermore excellent in flexibility and adhesion to the current collector and also forming a secondary battery that is furthermore excellent in battery characteristics can be formed.

The content of the binder in the electrode mixture is preferably 0.01 mass% or more, more preferably 0.1 mass% or more, further preferably 0.3 mass% or more, particularly preferably 0.5 mass% or more, and preferably 3.0 mass% or less, more preferably 2.5 mass% or less, further preferably 2.0 mass% or less, with respect to the total mass of the lithium-containing transition metal oxide, the conductive additive, and the binder, in view of forming an electrode mixture layer that is furthermore excellent in flexibility and adhesion to the current collector and also forming a secondary battery that is furthermore excellent in battery characteristics.

<Organic solvent>

The electrode mixture of the present disclosure further contains an organic solvent. Examples of the organic solvent can include nitrogen-containing organic solvents such as N-methyl-2-pyrrolidone, N,N-dimethylacetamide, and dimethylformamide; ketone solvents such as acetone, methyl ethyl ketone, cyclohexanone, and methyl isobutyl ketone; ester solvents such as ethyl acetate and butyl acetate; ether solvents such as tetrahydrofuran and dioxane; β-alkoxypropionamides such as β-methoxy-N,N-dimethylpropionamide, β-n-butoxy-N,N-dimethylpropionamide, and β-n-hexyloxy-N,N-dimethylpropionamide; and general-purpose organic solvents with a low boiling point such as mixed solvents thereof. Among these, the solvent is preferably at least one selected from the group consisting of N,N-dimethylformamide, N,N-dimethylacetamide, N-methyl-2-pyrrolidone, N-ethyl-2-pyrrolidone, and β-alkoxypropionamides, more preferably at least one selected from the group consisting of N-methyl-2-pyrrolidone and N,N-dimethylacetamide, in view of obtaining excellent coating properties.

The contents of the lithium-containing transition metal oxide, the binder, and the carbon nanomaterial in the electrode mixture of the present disclosure are determined in consideration of the coating properties to the current collector, formation of a thin film after drying, and the like. The total content of the lithium-containing transition metal oxide, the binder, and the carbon nanomaterial in the electrode mixture is preferably 50 to 90 mass%, more preferably 60 to 80 mass%.

The electrode mixture of the present disclosure can be prepared by mixing the lithium-containing transition metal oxide, the binder, the nanocarbon material, the organic solvent, and another component, as required. At this time, the order in which each component is mixed is not limited. For example, after mixing the binder, the nanocarbon material, and the organic solvent, the lithium-containing transition metal oxide and another component may be mixed therewith. Alternatively, a composite material of the binder and the lithium-containing transition metal oxide may be obtained, for

example, by a method including spraying a solution or a dispersion of the binder to the lithium-containing transition metal oxide and drying the resultant, and then the composite material obtained, the nanocarbon material, the organic solvent, and another component may be mixed.

The binder to be used desirably has a small-particle diameter, specifically an average particle diameter of 1,000 μm or less, particularly 50 to 350 μm, for enabling rapid dissolution in the aforementioned organic solvent.

<Electrode>

The electrode of the present disclosure comprises a current collector and an electrode mixture layer. The electrode mixture layer is formed by sing the electrode mixture of the present disclosure and may be provided one or each of both sides of the current collector.

Since the electrode of the present disclosure comprises an electrode mixture layer formed by using the electrode mixture of the present disclosure, the electrode has excellent flexibility and a sufficiently close contact between the current collector and the electrode mixture layer, and is capable of forming a secondary battery that is excellent in battery characteristics.

The density of the electrode mixture layer is preferably 2.0 to 5.0 $g/cm^3$, more preferably 2.5 to 5.0 $g/cm^3$.

The density of the electrode mixture layer can be calculated from the mass and the volume of the electrode mixture layer.

The thickness of the electrode mixture layer is preferably 20 μm or more, more preferably 45 μm or more, further preferably 55 μm or more, particularly preferably 60 μm or more, preferably 170 μm or less, more preferably 150 μm or less, in view of obtaining still outstanding battery characteristics. Further, the thickness of the electrode mixture layer may be 85 μm or less or may be less than 69 μm.

The thickness of the electrode mixture layer can be measured by a micrometer. In the case where the electrode mixture layer is provided on each of both sides of the current collector, the thickness of the electrode mixture layer in the present disclosure is a thickness per side.

Examples of the current collector of the electrode of the present disclosure include metal foils or metal meshes of iron, stainless steel, copper, aluminum, nickel, titanium, and the like. Among these, an aluminum foil is preferable.

The electrode of the present disclosure can be suitably produced by a production method including applying the electrode mixture of the present disclosure to the current collector. After applying the electrode mixture, the coating film may be dried, and the dry coating film obtained may be pressed.

The amount of the electrode mixture to be applied to the current collector is preferably 15 $mg/cm^2$ or more, more preferably 17.5 $mg/cm^2$ or more, preferably 60 $mg/cm^2$ or less, more preferably 50 $mg/cm^2$ or less. The amount of the electrode mixture to be applied is a dry weight of the electrode mixture per unit area.

<Secondary battery>

The present disclosure also provides a secondary battery comprising the aforementioned electrode.

The secondary battery of the present disclosure exhibits a high capacity retention rate after high-temperature storage, a low resistance increase rate, and a small change of the amount of gas and has excellent battery characteristics, since the secondary battery comprises an electrode formed by using the electrode mixture of the present disclosure.

The secondary battery of the present disclosure preferably comprises a positive electrode, a negative electrode, and a non-aqueous electrolyte, wherein one or each of the positive electrode and the negative electrode is the aforementioned electrode. Further, the secondary battery of the present disclosure preferably comprises a positive electrode, a negative electrode, and a non-aqueous electrolyte, wherein the positive electrode is the aforementioned electrode.

The non-aqueous electrolyte is not limited, and one or more of known solvents such as propylene carbonate, ethylene carbonate, butylene carbonate, γ-butyl lactone, 1,2-dimethoxyethane, 1,2-diethoxyethane, dimethyl carbonate, diethyl carbonate, and ethyl methyl carbonate can be used. The electrolyte to be used can be any one of conventionally known electrolytes and can be $LiClO_4$, $LiAsF_6$, $LiPF_6$, $LiBF_4$, LiCl, LiBr, $CH_3SO_3Li$, $CF_3SO_3Li$, cesium carbonate, or the like.

Since the electrode of the present disclosure has excellent flexibility and a sufficiently close contact between the current collector and the electrode mixture layer, and is capable of forming a secondary battery that is excellent in battery characteristics, the electrode can be suitably used as an electrode for wound-type secondary batteries. Further, the secondary battery of the present disclosure may be a wound-type secondary battery.

The electrode of the present disclosure is useful for non-aqueous electrolyte secondary batteries, specifically, not only for a lithium ion secondary battery including a liquid electrolyte as described above, but also for a lithium secondary battery including a polymer electrolyte. Further, it is useful also for electric double layer capacitors.

Although the embodiments have been described above, it will be understood that various changes in form and details can be made without departing from the spirit and scope of the claims.

EXAMPLES

Next, the embodiments of the present disclosure will be described with reference to examples, but the present disclosure is not limited to the examples.

The numerical values in Examples were measured by the following methods.

<Content of acrylic acid unit in PVdF>

The content of the acrylic acid unit in the PVdF was measured by acid-base titration of carboxylic acid groups. Specifically, about 0.5 g of the PVdF was dissolved in acetone at a temperature of 70 to 80°C. 5 ml of water was added dropwise under vigorous stirring so as to avoid solidification of the PVdF. In the neutral transition at about -270 mV, titration with an aqueous NaOH solution having a concentration of 0.1 N was performed until complete neutralization of acidity. From the measurement results, the amount of substance of the acrylic acid unit contained in 1 g of the PVdF was determined, and the content of the acrylic acid unit was calculated therefrom.

<Ratio of VdF unit to TFE unit in fluorine-containing copolymer>

The ratio of the VdF unit to the TFE unit in the fluorine-containing copolymer was measured in the state of a polymer solution in DMF-$d_7$ by $^{19}$F-NMR measurement using an NMR spectrometer (VNS400MHz, available from Agilent Technologies, Inc.).

In the $^{19}$F-NMR measurement, the following peak areas (A, B, C, and D) were determined, and the ratio of the VdF unit to the TFE unit was calculated therefrom.

A: Peak area at -86 ppm to -98 ppm
B: Peak area at -105 ppm to -118 ppm
C: Peak area at -119 ppm to -122 ppm
D: Peak area at -122 ppm to -126 ppm

$$\text{Proportion of VdF unit: } (4A + 2B)/(4A + 3B + 2C + 2D) \times 100 \text{ [mol\%]}$$

$$\text{Proportion of TFE unit: } (B + 2C + 2D)/(4A + 3B + 2C + 2D) \times 100 \text{ [mol\%]}$$

<Weight-average molecular weight>

The weight-average molecular weight was measured by gel permeation chromatography (GPC). The weight-average molecular weight was calculated based on the data (reference: polystyrene) measured under circulating dimethylformamide (DMF) as a solvent at a flow rate of 1.0 ml/minute, using AS-8010, CO-8020, columns (three columns, GMHHR-H, connected in series), available from Tosoh Corporation, and RID-10A, available from SHIMADZU CORPORATION.

<Melting point>

The melting point was determined using a differential scanning calorimetry (DSC) device and was a temperature corresponding to the maximum value in the heat-of-fusion curve when the temperature is raised from 30°C to 220°C at a rate of 10°C/minute, thereafter lowered to 30°C at a rate of 10°C/minute, and raised again to 220°C at a rate of 10°C/minute.

<Thickness of positive electrode mixture layer>

A test specimen was prepared by punching each of the positive electrodes produced in Examples and Comparative Examples using a hand punch with a diameter of 13 mm, and the total thickness of the test specimen was measured with a micrometer gauge with a minimum scale of 1 μm. A value obtained by subtracting the thickness of the

positive electrode current collector from the found value was defined as the thickness of the positive electrode mixture layer.

<Density of positive electrode mixture layer>

A test specimen was prepared by punching each of the positive electrodes produced in Examples and Comparative Examples using a hand punch with a diameter of 13 mm, and the mass and area of the test specimen were measured. Then, the density of the positive electrode mixture layer was calculated from the masses of the test specimen and the positive electrode current collector, the area of the test specimen, and the thickness of the positive electrode mixture layer determined by the aforementioned method.

<Adhesion between positive electrode mixture layer and current collector>

A test specimen of 1.2 cm × 7.0 cm was produced by cutting each of the positive electrodes produced in Examples and Comparative Examples. After the positive electrode mixture layer side of the test specimen was fixed to a movable jig with a double-sided adhesive tape, a tape was attached to a surface of the positive electrode current collector, and the stress (N/cm) when the tape was drawn at 90 degrees at a rate of 100 mm/minute was measured using an autograph. The load cell of the autograph used was 1 N.

<Flexibility of positive electrode>

Each of the positive electrode mixtures obtained in Examples and Comparative Examples was uniformly applied onto one side of a positive electrode current collector (an aluminum foil with a thickness of 20 μm), and NMP was completely volatilized, to produce an unpressed positive electrode. A test specimen of 2 cm × 10 cm was produced by cutting the unpressed positive electrode produced. The test specimen was pressed to produce a density-adjusted test specimen with a density of the positive electrode mixture layer of 3.6 g/cc. The density-adjusted test specimen was wound around a round bar having a diameter of 5 mm or a diameter of 3 mm, and the positive electrode mixture layer was visually checked and evaluated according to the following criteria.

Good: No cracks were observed.
Acceptable: Some cracks were observed, but no breakage of the positive electrode mixture layer or the positive electrode current collector was observed.
Poor: The positive electrode mixture layer and the positive electrode current collector were broken.

In Examples and Comparative Examples, polymers having the following physical properties were used.

<PVdF>

A: VdF homopolymer
Weight-average molecular weight: 900,000
Melting point: 171°C
B: VdF homopolymer
Weight-average molecular weight: 1,800,000
Melting point: 171°C
C: PVdF containing acrylic acid unit
Content of acrylic acid unit: 1.0 mol%
Weight-average molecular weight: 1,100,000
Melting point: 161°C

<Fluorine-containing copolymer>

a: Fluorine-containing copolymer containing VdF unit and TFE unit

$$VdF/TFE = 83/17\ (mol\%)$$

Weight-average molecular weight: 1,230,000
Melting point: 131°C

b: Fluorine-containing copolymer containing VdF unit and TFE unit

$$VdF/TFE = 63/37\ (mol\%)$$

Weight-average molecular weight: 1,130,000
Melting point: 160°C

c: Fluorine-containing copolymer containing VdF unit and TFE unit

$$VdF/TFE = 50/50\ (mol\%)$$

Further, the following positive electrode active materials and conductive additives were used in Examples and Comparative Examples.

NMC622: $LiNi_{0.6}Mn_{0.2}Co_{0.2}O_2$
NMC811: $LiNi_{0.8}Mn_{0.1}Co_{0.1}O_2$
NCA: $LiNi_{0.82}Co_{0.15}Al_{0.03}O_2$
AB: Acetylene black
CNT: Multilayer carbon nanotube, product name LB136-43, available from Cnano
Graphene: product name GNP-N, available from Shenzhen Sanshun Nano New Materials Co., Ltd.

<Example 1>

(Preparation of positive electrode mixture)

A fluorine-containing copolymer (a) as a binder was dissolved in N-methyl-2-pyrrolidone (NMP) to prepare a fluorine-containing copolymer (a) solution having a concentration of 8 mass%. The fluorine-containing copolymer (a) solution, NMC622 as a positive electrode active material, acetylene black (AB) as a conductive additive, and a multilayer carbon nanotube (CNT) were mixed using a stirrer to obtain a mixed solution having the composition ratio (active material/conductive additive/binder) described in Table 1. NMP was further added to and mixed with the mixed solution obtained to prepare a positive electrode mixture with a solid content of 71 mass%.

(Production of positive electrode)

The positive electrode mixture obtained was uniformly applied onto one side of a positive electrode current collector (an aluminum foil with a thickness of 20 μm), and NMP was completely volatilized. Then, the resultant was pressed by applying a pressure of 10 t using a roll press machine to produce a positive electrode composed of a positive electrode mixture layer and a positive electrode current collector.

Table 1 shows the amount of the positive electrode mixture applied per side, the thickness of the positive electrode mixture layer per side in the positive electrode, the density of the positive electrode mixture layer, and the adhesion of the positive electrode mixture layer to the positive electrode current collector.

(Production of NMC622 laminate cell)

The positive electrode produced was cut into 500 mm × 700 mm (with a positive electrode terminal), a strip-shaped negative electrode was cut into 502 mm × 702 mm (with a negative electrode terminal), and a lead was welded to each terminal. Further, a polypropylene film separator with a thickness of 20 μm was cut into a size of 504 mm × 800 mm, and the positive electrode and the negative electrode were wound with the separator interposed. The resultant was put into a packaging material. Then, 5 g of an electrolyte (obtained by dissolving $LiPF_6$ in a solvent obtained by mixing ethylene carbonate and ethyl methyl carbonate at a volume ratio of 3/7 to a concentration of 1 mol/liter) was put into the

packaging material, and the resultant packaging material was sealed to produce a wound laminated battery.

<Evaluation of battery characteristics>

The capacity retention rate after high-temperature storage, the resistance increase rate, and the change of the amount of gas of the wound laminated battery produced in Example 1 were measured by the following methods. Table 1 shows the results.

[Evaluation of initial characteristics]

The wound laminated battery was charged to 4.2 V at 25°C and a constant current equivalent to 0.2 C in the sandwiched and pressurized state between plates and then discharged to 3.0 V at a constant current of 0.2 C. This operation was performed in two cycles so that the battery was stable. In the third cycle, after charging at a constant current of 0.2 C to 4.2 V, the battery was charged at a constant voltage of 4.2 V to a current value of 0.05 C, and discharging to 3.0 V at a constant current of 0.2 C was performed. Then, after charging at a constant current of 0.2 C to 4.2 V, the battery was charged at a constant voltage of 4.2 V to a current value of 0.05 C, and the battery was discharged at a constant current of 0.2 C to 3.0 V in the fourth cycle, to determine the initial discharge capacity. Then, after charging at a constant current of 0.2 C to 4.2 V, the battery was charged at a constant voltage of 4.2 V to a current value of 0.05 C, to measure the initial resistance.

Here, 1 C represents a current value at which the standard capacity of the battery is discharged in 1 hour, and 5 C represents a current value that is five times larger than that value, 0.1 C represents a current value that is ten times smaller than that value, and 0.2 C represents a current value that is five times smaller than that value.

[High-temperature storage test]

The wound laminated battery for which the evaluation of initial characteristics was completed was stored at a high temperature under the conditions of 85°C and 36 hours. After the battery was sufficiently cooled, the volume of the battery was measured by the Archimedes method, and the change of the amount of gas was determined from the change between the volumes before and after the high-temperature storage based on the following formula.

Then, the battery was discharged at 0.5 C to 3 V at 25°C, and the remaining capacity after high-temperature storage was determined, to determine the capacity retention rate (%) after high-temperature storage based on the following formula. Further, after charging at a constant current of 0.2 C to 4.2 V, the battery was charged at a constant voltage of 4.2 V to a current value of 0.05 C, and the battery was discharged at 0.5 C to 3 V. Then, after charging at a constant current of 0.2 C to 4.2 V, the battery was charged at a constant voltage of 4.2 V to a current value of 0.05 C, to measure the resistance after high-temperature storage and determine the resistance increase rate (%) based on the following formula.

Capacity retention rate after high-temperature storage (%) = (Remaining capacity)/(Initial discharge capacity) × 100

Resistance increase rate (%) = (Resistance after high-temperature storage (Ω))/(Initial resistance (Ω)) × 100

Change of amount of gas (%) = (Volume (ml) after high-temperature storage)/(Volume (ml) before high-temperature storage) × 100

<Examples 2 to 13 and Comparative Examples 1 to 4>

Each positive electrode mixture was prepared in the same manner as in Example 1, except that a binder was appropriately dissolved so that the concentration of the binder solution was 5 to 8 mass%, and that the type of binder, the type of conductive additive, the composition ratio, and the like were changed as shown in each table. Then, a positive electrode was produced using the positive electrode mixture obtained and evaluated in the same manner as in Example 1. Tables 1 and 2 show the results.

<Comparative Example 5>

The water dispersion of the fluorine-containing copolymer (c) was sprayed to NMC622, followed by drying, to produce a composite NMC622. The composite NMC622 was used as a positive electrode active material, and a positive electrode mixture was prepared in the same manner as in Example 1. Then, a positive electrode was produced using the positive electrode mixture obtained and evaluated in the same manner as in Example 1. Table 2 shows the evaluation results.

The description of "AB + CNT" in each Table indicates that acetylene black and a multilayer carbon nanotube were used as conductive additives. Further, the description of "AB + graphene" indicates that acetylene black and graphene were used as conductive additives.

In the column of "active material/conductive additive/binder (wt%)" in each Table, the ratio of the contents of the positive electrode active material, the conductive additive, or the binder, to the total mass of the positive electrode active material, the conductive additive, and the binder in the positive electrode mixture is described. Further, in the case where the positive electrode mixture contains two types of conductive additives, the ratio of the content of each conductive additive in the positive electrode mixture is separately described. For example, the description of "96.9/1.2/0.4/1.5" in Example 1 means that the positive electrode mixture contains 96.9 mass% of the positive electrode active material, 1.2 mass% of acetylene black, 0.4 mass% of the multilayer carbon nanotube, and 1.5 mass% of the binder, with respect to the total mass of the positive electrode active material, the conductive additive, and the binder.

<Example 14>

(Preparation of positive electrode mixture)

The fluorine-containing copolymer (a) as the binder was dissolved in N-methyl-2-pyrrolidone (NMP) to prepare a fluorine-containing copolymer (a) solution having a concentration of 8 mass%. The fluorine-containing copolymer (a) solution, NMC811 as a positive electrode active material, and acetylene black (AB) and a multilayer carbon nanotube (CNT) as conductive additives were mixed using a stirrer to obtain a mixed solution having the composition ratio (active material/conductive additive/binder) described in Table 3. NMP was further added to and mixed with the mixed solution obtained to prepare a positive electrode mixture with a solid content of 71 mass%.

(Production of positive electrode)

The positive electrode mixture obtained was uniformly applied onto one side of a positive electrode current collector (an aluminum foil with a thickness of 20 $\mu$m), and NMP was completely volatilized. Then, the resultant was pressed by applying a pressure of 10 t using a roll press machine to produce a positive electrode composed of a positive electrode mixture layer and a positive electrode current collector.

Table 3 shows the amount of the positive electrode mixture applied per side, the thickness of the positive electrode mixture layer per side in the positive electrode, the density of the positive electrode mixture layer, and the adhesion of the positive electrode mixture layer to the positive electrode current collector.

(Production of NMC811 laminate cell)

The positive electrode produced was cut into 500 mm $\times$ 700 mm (with a positive electrode terminal), a strip-shaped negative electrode was cut into 502 mm $\times$ 702 mm (with a negative electrode terminal), and a lead was welded to each terminal. Further, a polypropylene film separator with a thickness of 20 $\mu$m was cut into a size of 504 mm $\times$ 800 mm, and the positive electrode and the negative electrode were wound with the separator interposed. The resultant was put into a packaging material. Then, 5 g of an electrolyte (obtained by dissolving $LiPF_6$ in a solvent obtained by mixing ethylene carbonate and ethyl methyl carbonate at a volume ratio of 3/7 to a concentration of 1 mol/liter) was put into the packaging material, and the resultant packaging material was sealed to produce a wound laminated battery.

<Evaluation of battery characteristics>

The capacity retention rate after high-temperature storage, the resistance increase rate, and the change of the amount of gas of the wound laminated battery produced in Example 14 were measured by the following methods. Table 3 shows the results.

[Evaluation of initial characteristics]

The wound laminated battery was charged to 4.1 V at 25°C and a constant current equivalent to 0.2 C in the sandwiched and pressurized state between plates and then discharged to 3.0 V at a constant current of 0.2 C. This operation was performed in two cycles so that the battery was stable. In the third cycle, after charging at a constant current of 0.2 C to 4.1 V, the battery was charged at a constant voltage of 4.1 V to a current value of 0.05 C, and discharging to 3.0 V at a constant current of 0.2 C was performed. Then, after charging at a constant current of 0.2 C to 4.1 V, the battery was charged at a constant voltage of 4.1 V to a current value of 0.05 C, and the battery was discharged at a constant current of 0.2 C to 3.0 V in the fourth cycle, to determine the initial discharge capacity. Then, after charging at a constant current of 0.2 C to 4.1 V, the battery was charged at a constant voltage of 4.1 V to a current value of 0.05 C, to measure the initial resistance.

Here, 1 C represents a current value at which the standard capacity of the battery is discharged in 1 hour, and 5 C represents a current value that is five times larger than that value, 0.1 C represents a current value that is ten times smaller than that value, and 0.2 C represents a current value of five times smaller than that value.

[High-temperature storage test]

The wound laminated battery for which the evaluation of initial characteristics was completed was stored at a high temperature under the conditions of 70°C and 96 hours. After the battery was sufficiently cooled, the volume of the battery was measured by the Archimedes method, and the change of the amount of gas was determined from the change between the volumes before and after the high-temperature storage based on the following formula.

Then, the battery was discharged at 0.5 C to 3 V at 25°C, and the remaining capacity after high-temperature storage was determined, to determine the capacity retention rate (%) after high-temperature storage based on the following formula. Further, after charging at a constant current of 0.2 C to 4.1 V, the battery was charged at a constant voltage of 4.1 V to a current value of 0.05 C, and the battery was discharged at 0.5 C to 3 V. Then, after charging at a constant current of 0.2 C to 4.1 V, the battery was charged at a constant voltage of 4.1 V to a current value of 0.05 C, to measure the resistance after high-temperature storage and determine the resistance increase rate (%) based on the following formula.

Capacity retention rate after high-temperature storage (%) = (Remaining capacity)/(Initial discharge capacity) × 100

Resistance increase rate (%)=(Resistance after high-temperature storage (Ω))/(Initial resistance (Ω)) × 100

Change of amount of gas (%) = (Volume (ml) after high-temperature storage)/(Volume (ml) before high-temperature storage) × 100

<Examples 15 to 26 and Comparative Examples 6 to 9>

A positive electrode mixture was prepared in the same manner as in Example 14, except that a binder was appropriately dissolved so that the concentration of the binder solution was 5 to 8 mass%, and that the type of binder,

the type of conductive additive, the composition ratio, and the like were changed as described in each Table. Then, a positive electrode was produced using the positive electrode mixture obtained and evaluated in the same manner as in Example 14. Tables 3 and 4 show the results.

<Comparative Example 10>

The water dispersion of the fluorine-containing copolymer (c) was sprayed to NMC811, followed by drying, to produce a composite NMC811. The composite NMC811 was used as a positive electrode active material, and a positive electrode mixture was prepared in the same manner as in Example 14. Then, a positive electrode was produced using the positive electrode mixture obtained and evaluated in the same manner as in Example 14. Table 4 shows the evaluation results.

<Example 27>

(Preparation of positive electrode mixture)

A fluorine-containing copolymer (a) as a binder was dissolved in N-methyl-2-pyrrolidone (NMP) to prepare a fluorine-containing copolymer (a) solution having a concentration of 8 mass%. The fluorine-containing copolymer (a) solution, NCA as a positive electrode active material, and acetylene black (AB) and a multilayer carbon nanotube (CNT) as conductive additives were mixed using a stirrer to obtain a mixed solution having the composition ratio (active material/conductive additive/binder) described in Table 5. NMP was further added to and mixed with the mixed solution obtained to prepare a positive electrode mixture with a solid content of 71 mass%.

(Production of positive electrode)

The positive electrode mixture obtained was uniformly applied onto one side of a positive electrode current collector (an aluminum foil with a thickness of 20 μm), and NMP was completely volatilized. Then, the resultant was pressed by applying a pressure of 10 t using a roll press machine to produce a positive electrode composed of a positive electrode mixture layer and a positive electrode current collector.

Table 5 shows the amount of the positive electrode mixture applied per side, the thickness of the positive electrode mixture layer per side in the positive electrode, the density of the positive electrode mixture layer, and the adhesion of the positive electrode mixture layer to the positive electrode current collector.

(Production of NCA laminate cell)

The positive electrode produced was cut into 500 mm × 700 mm (with a positive electrode terminal), a strip-shaped negative electrode was cut into 502 mm × 702 mm (with a negative electrode terminal), and a lead was welded to each terminal. Further, a polypropylene film separator with a thickness of 20 μm was cut into a size of 504 mm × 800 mm, and the positive electrode and the negative electrode were wound with the separator interposed therebetween. The resultant was put into a packaging material. Then, 5 g of an electrolyte (obtained by dissolving $LiPF_6$ in a solvent obtained by mixing ethylene carbonate and ethyl methyl carbonate at a volume ratio of 3/7 to a concentration of 1 mol/liter) was put into the packaging material, and the resultant packaging material was sealed to produce a wound laminated battery.

<Evaluation of battery characteristics>

The capacity retention rate after high-temperature storage, the resistance increase rate, and the change of the amount of gas of the wound laminated battery produced in Example 27 were measured by the following methods. Table 5 shows the results.

[Evaluation of initial characteristics]

The wound laminated battery was charged to 4.0 V at 25°C and a constant current equivalent to 0.2 C in the sandwiched and pressurized state between plates and then discharged to 3.0 V at a constant current of 0.2 C. This operation was performed in two cycles so that the battery was stable. In the third cycle, after charging at a constant current of 0.2 C to 4.0 V, the battery was charged at a constant voltage of 4.0 V to a current value of 0.05 C, and discharging to 3.0 V at a constant current of 0.2 C was performed. Then, after charging at a constant current of 0.2 C to 4.0 V, the battery was charged at a constant voltage of 4.0 V to a current value of 0.05 C, and the battery was

discharged at a constant current of 0.2 C to 3.0 V in the fourth cycle, to determine the initial discharge capacity. Then, after charging at a constant current of 0.2 C to 4.0 V, the battery was charged at a constant voltage of 4.0 V to a current value of 0.05 C, to measure the initial resistance.

Here, 1 C represents a current value at which the standard capacity of the battery is discharged in 1 hour, and 5 C represents a current value that is five times larger than that value, 0.1 C represents a current value that is ten times smaller than that value, and 0.2 C represents a current value that is five times smaller than that value.

[High-temperature storage test]

The wound laminated battery for which the evaluation of initial characteristics was completed was stored at a high temperature under the conditions of 60°C and 720 hours. After the battery was sufficiently cooled, the volume of the battery was measured by the Archimedes method, and the change of the amount of gas was determined from the change between the volumes before and after the high-temperature storage based on the following formula.

Then, the battery was discharged at 0.5 C to 3 V at 25°C, and the remaining capacity after high-temperature storage was determined, to determine the capacity retention rate (%) after high-temperature storage based on the following formula. Further, after charging at a constant current of 0.2 C to 4.0 V, the battery was charged at a constant voltage of 4.0 V to a current value of 0.05 C, and the battery was discharged at 0.5 C to 3 V. Then, after charging at a constant current of 0.2 C to 4.0 V, the battery was charged at a constant voltage of 4.0 V to a current value of 0.05 C, to measure the resistance after high-temperature storage and determine the resistance increase rate (%) based on the following formula.

Capacity retention rate after high-temperature storage (%) = (Remaining capacity)/(Initial discharge capacity) × 100

Resistance increase rate (%)=(Resistance after high-temperature storage (Ω))/(Initial resistance (Ω)) × 100

Change of amount of gas (%) = (Volume (ml) after high-temperature storage)/(Volume (ml) before high-temperature storage) × 100

<Examples 28 to 39 and Comparative Examples 11 to 14>

A positive electrode mixture was prepared in the same manner as in Example 27, except that a binder was appropriately dissolved so that the concentration of the binder solution was 5 to 8 mass%, and that the type of binder, the type of conductive additive, the composition ratio, and the like were changed as described in each Table. Then, a positive electrode was produced using the positive electrode mixture obtained and evaluated in the same manner as in Example 27. Tables 5 and 6 show the results.

<Comparative Example 15>

The water dispersion of the fluorine-containing copolymer (c) was sprayed to NCA, followed by drying, to produce a composite NCA. The composite NCA was used as a positive electrode active material, and a positive electrode mixture was prepared in the same manner as in Example 27. Then, a positive electrode was produced using the positive electrode mixture obtained and evaluated in the same manner as in Example 27. Table 6 shows the evaluation results.

[Table 1]

Table 1

| | | Example 1 | Example 2 | Example 3 | Example 4 | Example 5 | Example 6 | Example 7 | Example 8 | Example 9 |
|---|---|---|---|---|---|---|---|---|---|---|
| Binder | PVDF | - | A | B | C | C | B | B | A | C |
| | Fluorine-containing copolymer | a | a | a | a | b | a | a | a | a |
| | Mass ratio of PVDF/nuorine-containing copolymer | 0/100 | 75/25 | 75125 | 75125 | 75/25 | 75125 | 75125 | 75125 | 60/40 |
| Positive electrode mixture | Positive electrode active material | NMC622 | NMC622 | NMC622 | NMC622 | NMC622 | NMC622 | NMC622 | NMC622 | NMC622 |
| | Conductive additive | AB+CNT | AB+CNT | AB+CNT | AB+CNT | AB+CNT | AB+CNT | AB+CNT | AB+Graphene | AB+CNT |
| | Active material/conductive additive/binder (wt%) | 96.9/1.2/0.4/1.5 | 96.9/1.2/0.4/1.5 | 96.9/1.2/0.4/1.5 | 96.9/1.2/0.4/1.5 | 96.9/1.2/0.4/1.5 | 96.9/0.8/0.8/1.5 | 96.910.411.211.5 | 96.9/1.2/0.4/1.5 | 96.9/0.4/1.2/1.5 |
| | Amount applied ($mg/cm^2$) | 22.5 | 22.7 | 22.5 | 22.1 | 21.7 | 23.0 | 22.0 | 22.5 | 22.5 |

(continued)

| | | Example 1 | Example 2 | Example 3 | Example 4 | Example 5 | Example 6 | Example 7 | Example 8 | Example 9 |
|---|---|---|---|---|---|---|---|---|---|---|
| Positive electrode mixture layer | Thickness of positive electrode mixture layer (μm) | 80 | 81 | 79 | 80 | 79 | 83 | 77 | 79 | 80 |
| | Density of positive electrode mixture layer (g/cc) | 2.81 | 2.80 | 2.85 | 2.76 | 2.75 | 2.77 | 2.86 | 2.85 | 2.81 |
| | Adhesion between positive electrode mixture layer and current collector (N/cm) | 0.13 | 0.21 | 0.24 | 0.48 | 0.46 | 0.30 | 0.32 | 0.14 | 0.30 |
| | Flexibility of positive electrode φ5mm | Good | Good | Good | Good | Good | Good | Good | Good | Good |
| | Flexibility of positive electrode φ3mm | Good | Good | Good | Good | Good | Good | Good | Good | Good |

(continued)

| | | Example 1 | Example 2 | Example 3 | Example 4 | Example 5 | Example 6 | Example 7 | Example 8 | Example 9 |
|---|---|---|---|---|---|---|---|---|---|---|
| Battery characteristics | Capacity retention rate after high-temperature storage (%) | 77 | 83 | 86 | 86 | 83 | 88 | 90 | 82 | 88 |
| | Resistance increase rate (%) | 162 | 153 | 151 | 158 | 161 | 147 | 142 | 156 | 148 |
| | Change of amount of gas (%) | 103 | 102 | 102 | 102 | 102 | 101 | 101 | 102 | 103 |

[Table 2]

Table 2

| | | Example 10 | Example 11 | Example 12 | Example 13 | Comparative Example 1 | Comparative Example 2 | Comparative Example 3 | Comparative Example 4 | Comparative Example 5 |
|---|---|---|---|---|---|---|---|---|---|---|
| Binder | PVDF | C | C | C | C | - | A | B | C | C |
| | Fluorine-containing copolymer | a | b | b | a | a | a | a | a | c |
| | Mass ratio or PVDF/fluorine-containing copolymer | 90/10 | 70/30 | 70/30 | 22/78 | 0/100n | 80/20 | 80/20 | 80/20 | 22/78 |
| Positive electrode mixture | Positive electrode active material | NMC622 | NMC622 | NMC622 | NMC622 | NMC622 | NMC622 | NMC622 | NMC622 | NMC622 |
| | Conductive additive | AB+CNT | AB+CNT | AB+CNT | AB+CNT | AB | AB | AB | AB | AB+CNT |
| | Active material/conductive additive/binder (wt%) | 96.9/0.4/1.2/1.5 | 96.9/0.4/1.2/1.5 | 96.9/0.4/1.2/1.5 | 98.4/0.6/0.1/0.9 | 96.9/1.6/1.5 | 96.911.611.5 | 96.911.611.5 | 96.9/1.6/1.5 | 98.4/0.6/0.1/0.9 |
| | Amount applied ($mg/cm^2$) | 22.5 | 18.0 | 25.0 | 22.5 | 22.2 | 23.0 | 23.1 | 22.2 | 22.4 |

(continued)

| | | Example 10 | Example 11 | Example 12 | Example 13 | Comparative Example 1 | Comparative Example 2 | Comparative Example 3 | Comparative Example 4 | Comparative Example 5 |
|---|---|---|---|---|---|---|---|---|---|---|
| Positive electrode mixture layer | Thickness of positive electrode mixture layer (μm) | 80 | 64 | 89 | 80 | 77 | 80 | 81 | 77 | 80 |
| | Density of positive electrode mixture layer (g/cc) | 2.81 | 2.81 | 2.81 | 2.81 | 2.88 | 2.88 | 2.85 | 2.88 | 2.80 |
| | Adhesion between positive electrode mixture layer ano current collector (N/cm) | 0.52 | 0.50 | 0.42 | 0.10 | 0.04 | 0.13 | 0.15 | 0.32 | 0.06 |
| | Flexibility of positive electrode ϕ5mm | Good | Good | Good | Good | Good | Good | Good | Good | Good |
| | Flexibility of positive electrode ϕ3mm | Good | Good | Good | Good | Good | Good | Good | Good | Good |
| Battery characteristics | Capacity retention rate after high-temperature storage (%) | 88 | 87 | 85 | 81 | 72 | 76 | 78 | 78 | 61 |
| | Resistance increase rate (%) | 152 | 145 | 154 | 158 | 173 | 161 | 160 | 170 | 168 |
| | Change of amount of gas (%) | 101 | 102 | 102 | 103 | 105 | 104 | 104 | 103 | 108 |

[Table 3]

Table 3

| | | Example 14 | Example 15 | Example 16 | Example 17 | Example 18 | Example 19 | Example 20 | Example 21 | Example 22 |
|---|---|---|---|---|---|---|---|---|---|---|
| Binder | PVDF | - | A | B | C | C | B | B | A | C |
| | Fluorine-containing copolymer | a | a | a | a | b | a | a | a | a |
| | Mass ratio of PVDF/fluorine-containing copolymer | 0/100 | 75/25 | 15/25 | 75125 | 75125 | 75125 | 75125 | 75/25 | 60/40 |
| Positive electrode mixture | Positive electrode active material | NMC811 | NMC811 | NMC811 | NMC811 | NMC811 | NMC811 | NMC811 | NMC811 | NMC811 |
| | Conductive additive | AB+CNT | AB+CNT | AB+CNT | AB+CNT | AB+CNT | AB+CNT | AB+CNT | AB+Graphene | AB+CNT |
| | Active material/conductive additive/binder (wt%) | 96.9/1.2/0.4/1.5 | 96.9/1.2/0.4/1.5 | 96.9/1.2/0.4/1.5 | 96.9/1,2/0.4/1.5 | 96.9/1.2/0.4/1.5 | 96.910.810.811.5 | 96.9/0.4/1.2/1.5 | 96.9/1.2/0.4/1.5 | 96.9/0.4/1.2/1.5 |
| | Amount applied ($mg/cm^2$) | 22.2 | 22.0 | 22.9 | 22.6 | 22.1 | 22.2 | 22.8 | 22.5 | 23.0 |

(continued)

| | | Example 14 | Example 15 | Example 16 | Example 17 | Example 18 | Example 19 | Example 20 | Example 21 | Example 22 |
|---|---|---|---|---|---|---|---|---|---|---|
| Positive electrode mixture layer | Thickness of positive electrode mixture layer ($\mu$m) | 77 | 80 | 83 | 81 | 79 | 79 | 82 | 81 | 81 |
| | Density of positive electrode mixture layer (g/cc) | 2.88 | 2.75 | 2.76 | 2.79 | 2.80 | 2.81 | 2.78 | 2.78 | 2.84 |
| | Adhesion between positive electrode mixture layer and current collector (N/cm) | 0.12 | 0.19 | 0.22 | 0.43 | 0.41 | 0.27 | 0.29 | 0.13 | 0.27 |
| | Flexibility of positive electrode $\phi$5mm | Good | Good | Good | Good | Good | Good | Good | Good | Good |
| | Flexibility of positive electrode $\phi$3mm | Good | Good | Good | Good | Good | Good | Good | Good | Good |

(continued)

| | | Example 14 | Example 15 | Example 16 | Example 17 | Example 18 | Example 19 | Example 20 | Example 21 | Example 22 |
|---|---|---|---|---|---|---|---|---|---|---|
| Battery characteristics | Capacity retention rate after high-temperature storage (%) | 75 | 82 | 87 | 82 | 80 | 87 | 88 | 83 | 84 |
| | Resistance increase rate (%) | 164 | 155 | 151 | 158 | 160 | 149 | 144 | 154 | 152 |
| | Change of amount of gas (%) | 103 | 102 | 103 | 105 | 105 | 103 | 103 | 102 | 105 |

[Table 4]

Table 4

| | | Example 23 | Example 24 | Example 25 | Example 26 | Comparative Example 6 | Comparative Example 7 | Comparative Example 8 | Comparative Example 9 | Comparative Example 10 |
|---|---|---|---|---|---|---|---|---|---|---|
| Binder | PVDF | C | C | C | C | - | A | B | C | C |
| | Fluorine-containing copolymer | a | b | b | a | a | a | a | a | c |
| | Mass ratio of PVDF/fluorine-containing copolymer | 90/10 | 70/30 | 70/30 | 22/78 | 0/100 | 80/20 | 80/20 | 80/20 | 22/78 |
| Positive electrode mixture | Positive electrode active material | NMC811 | NMC811 | NMC811 | NMC811 | NMC811 | NMC811 | NMC811 | NMC811 | NMC811 |
| | Conductive additive | AB+CNT | AB+CNT | AB+CNT | AB+CNT | AB | AB | AB | AB | AB+CNT |
| | Active material/conductive additive/binder (wt%) | 96.9/0.4/1.2/1.5 | 96.9/0.4/1.2/1.5 | 96.9/0.4/1.2/1.5 | 98.4/0.6/0.1/0.9 | 96.9/1.6/1.5 | 96.9/1.6/1.5 | 96.9/1.6/1.5 | 96.9/1.6/1.5 | 98.4/0.6/0.1/0.9 |
| | Amount applied ($mg/cm^2$) | 22.5 | 17.9 | 25.3 | 22.5 | 22.6 | 22.4 | 21.9 | 23.0 | 22.6 |

(continued)

| | | Example 23 | Example 24 | Example 25 | Example 26 | Comparative Example 6 | Comparative Example 7 | Comparative Example 8 | Comparative Example 9 | Comparative Example 10 |
|---|---|---|---|---|---|---|---|---|---|---|
| Positive electrode mixture layer | Thickness of positive electrode mixture layer (μm) | 80 | 63 | 92 | 80 | 79 | 80 | 79 | 82 | 80 |
| | Density of positive electrode mixture layer (g/cc) | 2.81 | 2.84 | 2.75 | 2.81 | 2.86 | 2.80 | 2.77 | 2.80 | 2.83 |
| | Adhesion between positive electrode mixture layer and current collector (N/cm) | 0.47 | 0.45 | 0.38 | 0.09 | 0.04 | 0.12 | 0.14 | 0.29 | 0.05 |
| | Flexibility of positive electrode ϕ5mm | Good | Good | Good | Good | Good | Good | Good | Good | Good |
| | Flexibility of positive electrode ϕ3mm | Good | Good | Good | Good | Good | Good | Good | Good | Good |
| Battery characteristics | Capacity retention rate after high-temperature storage (%) | 85 | 83 | 82 | 80 | 70 | 76 | 78 | 75 | 59 |
| | Resistance increase rate (%) | 155 | 147 | 152 | 158 | 178 | 165 | 163 | 174 | 170 |
| | Change of amount of gas (%) | 104 | 104 | 104 | 103 | 105 | 105 | 105 | 104 | 109 |

[Table 5]

Table 5

| | | Example 27 | Example 28 | Example 29 | Example 30 | Example 31 | Example 32 | Example 33 | Example 34 | Example 35 |
|---|---|---|---|---|---|---|---|---|---|---|
| Binder | PVDF | - | A | B | C | C | B | B | A | C |
| | Fluorine-containing copolymer | a | a | a | a | b | a | a | a | a |
| | Mass ratio of PVDF/fluorine-containing copolymer | 0/100 | 75/25 | 75/25 | 75/25 | 75125 | 75125 | 75/25 | 75/25 | 60/40 |
| Positive electrode mixture | Positive electrode active material | NCA | NCA | NCA | NCA | NCA | NCA | NCA | NCA | NCA |
| | Conductive additive | AB+CNT | AB+CNT | AB+CNT | AB+CNT | AB+CNT | AB+CNT | AB+CNT | AB+Graphene | AB+CNT |
| | Active material/conductive additive/binder (wt%) | 96.9/1.2/0.4/1.5 | 96.9/1.2/0.4/1.5 | 96.9/1.2/0.4/1.5 | 96.9/1.2/0.4/1.5 | 96.9/1.2/0.4/1.5 | 96.910,8/0.8/1.5 | 96.9/0.4/1.2/1.5 | 96.9/1.2/0.4/1.5 | 96.9/0.4/1.2/1.5 |
| | Amount applied ($mg/cm^2$) | 22.5 | 22.4 | 22.2 | 22.4 | 22.8 | 22.4 | 22.5 | 22.8 | 22.2 |

(continued)

| | | Example 27 | Example 28 | Example 29 | Example 30 | Example 31 | Example 32 | Example 33 | Example 34 | Example 35 |
|---|---|---|---|---|---|---|---|---|---|---|
| Positive electrode mixture layer | Thickness of positive electrode mixture layer (μm) | 80 | 79 | 79 | 80 | 81 | 80 | 80 | 81 | 79 |
| | Density of positive electrode mixture layer (g/cc) | 2.81 | 2.84 | 2.81 | 2.80 | 2.81 | 2.80 | 2.81 | 2.81 | 2.81 |
| | Adhesion between positive electrode mixture layer and current collector (N/cm) | 0.10 | 0.16 | 0.18 | 0.36 | 0.35 | 0.23 | 0.24 | 0.11 | 0.23 |
| | Flexibility of positive electrode ϕ5mm | Good | Good | Good | Good | Good | Good | Good | Good | Good |
| | Flexibility of positive electrode ϕ3mm | Good | Good | Good | Good | Good | Good | Good | Good | Good |

(continued)

| | | Example 27 | Example 28 | Example 29 | Example 30 | Example 31 | Example 32 | Example 33 | Example 34 | Example 35 |
|---|---|---|---|---|---|---|---|---|---|---|
| Battery characteristics | Capacity retention rate after high-temperature storage (%) | 75 | 82 | 87 | 82 | 80 | 87 | 88 | 83 | 84 |
| | Resistance increase rate (%) | 161 | 150 | 148 | 153 | 155 | 143 | 141 | 150 | 144 |
| | Change of amount of gas (%) | 102 | 103 | 104 | 105 | 103 | 103 | 104 | 103 | 103 |

[Table 6]

Table 6

| | | Example 38 | Example 37 | Example 38 | Example 39 | Comparative Example 11 | Comparative Example 12 | Comparative Example 13 | Comparative Example 14 | Comparative Example 15 |
|---|---|---|---|---|---|---|---|---|---|---|
| Binder | PVDF | C | C | C | C | - | A | B | C | C |
| | Fluorine-containing copolymer | a | b | b | a | a | a | a | a | c |
| | Mass ratio of PVDF/iluorine-containing copolymer | 90/10 | 70130 | 70/30 | 22/78 | 01100 | 80/20 | 80/20 | 80/20 | 22178 |
| Positive electrode mixture | Positive electrode active material | NCA | NCA | NCA | NCA | NCA | NCA | NCA | NCA | NCA |
| | Conductive additive | AB+CNT | AB+CNT | AB+CNT | AB+CNT | AB | AB | AB | AB | AB+CNT |
| | Active material/conductive additive/binder (wt%) | 96.9/0.4/1.2/1.5 | 96.9/0.4/1.2/1.5 | 96.9/0.4/1.2/1.5 | 98.4/0.6/0.1/0.9 | 96.9/1.6/1.5 | 96.9/1.6/1.5 | 96.9/1.6/1.5 | 96.9/1.6/1.5 | 98.4/0.6/0.1/0.9 |
| | Amount applied ($mg/cm^2$) | 22.8 | 17.7 | 25.1 | 22.6 | 22.6 | 22.1 | 22.8 | 22.0 | 22.6 |

(continued)

| | | Example 38 | Example 37 | Example 38 | Example 39 | Comparative Example 11 | Comparative Example 12 | Comparative Example 13 | Comparative Example 14 | Comparative Example 15 |
|---|---|---|---|---|---|---|---|---|---|---|
| Positive electrode mixture layer | Thickness of positive electrode mixture layer (μm) | 82 | 63 | 90 | 81 | 82 | 80 | 83 | 79 | 82 |
| | Density of positive electrode mixture layer (g/cc) | 2.78 | 2.81 | 2.79 | 2.79 | 2.76 | 2.76 | 2.75 | 2.78 | 2.76 |
| | Adhesion between positive electrode mixture layer and current collector (N/cm) | 0.39 | 0.38 | 0.32 | 0.08 | 0.03 | 0.10 | 0.11 | 0.24 | 0.05 |
| | Flexibility of positive electrode ϕ5mm | Good | Good | Good | Good | Good | Good | Good | Good | Good |
| | Flexibility of positive electrode ϕ3mm | Good | Good | Good | Good | Good | Good | Good | Good | Good |
| Battery characteristics | Capacity retention rate after high-temperature storage (%) | 85 | 83 | 82 | 80 | 70 | 76 | 78 | 75 | 59 |
| | Resistance increase rate (%) | 147 | 141 | 152 | 158 | 171 | 160 | 162 | 169 | 168 |
| | Change of amount of gas (%) | 102 | 102 | 104 | 102 | 105 | 104 | 104 | 104 | 109 |

## Claims

1. An electrode mixture comprising: a lithium-containing transition metal oxide; a conductive additive; a binder; and an organic solvent, wherein

   the conductive additive comprises at least one nanocarbon material selected from the group consisting of a multilayer carbon nanotube, a carbon nanohorn, a carbon nanofiber, a fullerene, and a graphene,
   the binder comprises a fluorine-containing copolymer comprising vinylidene fluoride unit and a fluorinated monomer unit, provided that vinylidene fluoride unit is excluded from the fluorinated monomer unit, and
   a content of vinylidene fluoride unit in the fluorine-containing copolymer is more than 50 mol% and 99 mol% or less with respect to all monomer units.

2. The electrode mixture according to claim 1, wherein
   the nanocarbon material is at least one selected from the group consisting of the multilayer carbon nanotube and the graphene.

3. The electrode mixture according to claim 1 or 2, wherein
   the content of vinylidene fluoride unit in the fluorine-containing copolymer is 57.0 mol% or more and 97.0 mol% or less with respect to all monomer units.

4. The electrode mixture according to any one of claims 1 to 3, wherein
   the fluorinated monomer unit is tetrafluoroethylene unit.

5. The electrode mixture according to any one of claims 1 to 4, wherein
   a content of the binder is 0.3 to 3.0 mass% with respect to the total mass of the lithium-containing transition metal oxide, the conductive additive, and the binder.

6. The electrode mixture according to any one of claims 1 to 5, wherein
   a content of the conductive additive is 0.3 to 3.0 mass% with respect to the total mass of the lithium-containing transition metal oxide, the conductive additive, and the binder.

7. The electrode mixture according to any one of claims 1 to 6, wherein
   the binder further comprises a polyvinylidene fluoride.

8. An electrode comprising:

   a current collector; and
   an electrode mixture layer provided on one or each of both sides of the current collector and formed by the electrode mixture according to any one of claims 1 to 7.

9. A secondary battery comprising the electrode according to claim 8.

## INTERNATIONAL SEARCH REPORT

International application No.
PCT/JP2021/013297

A. CLASSIFICATION OF SUBJECT MATTER
C08L 27/16(2006.01)i; H01M 4/131(2010.01)i; H01M 4/62(2006.01)i; C01B 32/15(2017.01)i
FI: H01M4/131; H01M4/62 Z; C08L27/16; C01B32/15
According to International Patent Classification (IPC) or to both national classification and IPC

B. FIELDS SEARCHED
Minimum documentation searched (classification system followed by classification symbols)
C08L27/16; H01M4/131; H01M4/62; C01B32/15

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2015-109154 A (SAMSUNG SDI CO., LTD.) 11 June 2015 (2015-06-11) paragraphs [0063]-[0072], example 5 | 1-9 |
| Y | JP 2018-063932 A (DAIKIN INDUSTRIES, LTD.) 19 April 2018 (2018-04-19) paragraphs [0081]-[0085], examples 1-4 | 1-9 |
| Y | JP 2018-060745 A (DAIKIN INDUSTRIES, LTD.) 12 April 2018 (2018-04-12) paragraphs [0086]-[0090], examples 1-4 | 1-9 |
| A | JP 2004-220911 A (MITSUBISHI MATERIALS CORP.) 05 August 2004 (2004-08-05) example 3 | 1-9 |
| A | JP 2013-098085 A (ASAHI GLASS CO., LTD.) 20 May 2013 (2013-05-20) example 1 | 1-9 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 09 June 2021 (09.06.2021) | 22 June 2021 (22.06.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application no.
PCT/JP2021/013297

| Patent Documents referred in the Report | Publication Date | Patent Family | Publication Date |
|---|---|---|---|
| JP 2015-109154 A | 11 Jun. 2015 | KR 10-2015-0064697 A | |
| JP 2018-063932 A | 19 Apr. 2018 | US 2019/0296359 A1<br>paragraphs [0093]-[0099], examples 1-4<br>WO 2018/066430 A1<br>EP 3447831 A1 | |
| JP 2018-060745 A | 12 Apr. 2018 | (Family: none) | |
| JP 2004-220911 A | 05 Aug. 2004 | (Family: none) | |
| JP 2013-098085 A | 20 May 2013 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2017182989 A